# EUROPEAN PATENT SPECIFICATION

(11) **EP 3 988 850 B1**
(45) Date of publication and mention of the grant of the patent: **21.08.2024**
(21) Application number: 21180989.2
(22) Date of filing: 22.06.2021
(51) Int. Cl.: F24F 8/80, H04R 1/00, F24F 8/108, F24F 13/20, H04R 1/02

(54) **PORTABLE AIR PURIFIER**
TRAGBARER LUFTREINIGER
PURIFICATEUR D'AIR PORTABLE

(30) Priority: 26.10.2020 KR 20200139217
(43) Date of publication of application: 27.04.2022
(73) Proprietor: LG Electronics Inc., Seoul 07336 (KR)
(72) Inventor: LEE, Kunyoung, 08592 Seoul (KR); LEE, Miji, 08592 Seoul (KR); KIM, Dongeun, 08592 Seoul (KR)
(74) Representative: Ter Meer Steinmeister & Partner

(56) References cited:
- EP-A1- 3 683 073
- CN-A- 108 444 003
- KR-A- 20190 086 116
- KR-B1- 101 994 906

## Description

### BACKGROUND

### 1. Technical Field

The present invention relates to a portable air purifier, and one particular implementation relates to a portable air purifier that may be portably used.

### 2. Description of Related Art

An air purifier may be widely used in modern life and purify air by filtering physical particles such as dust, fine dust, and ultrafine dust, chemical substances such as odor particles and harmful gases, and microorganisms such as bacteria and viruses.

Air purifiers are becoming essential apparatuses even in homes owing to an influence of urbanization, industrialization, and internationalization. In addition, the demand of the air purifier is rapidly increasing due to an increase in fine dust and in allergic patients, and owing to an improvement in the standard of living.

The air purifier may have a large size such that the air purifier is used for an environment with an area exceeding 100 m2 such as home. A filter to filter the physical particles such as the dust, a filter to filter the chemical substances such as gas, and a filter to filter the microorganisms such as the bacterial viruses may be used for the air purifier in combination. That is, the air purifier having the large size may be used in a large space such that the air purifier accommodates various types of filters in combination.

However, using the large-sized air purifier in a small space such as a one room and an interior of a vehicle, a very large space such as a public library, or outdoors may be inefficient in terms of space utilization, mobility, and energy consumption. In addition, the small-sized air purifier may be more suitable for frequently moving users instead of the large-sized air purifier and the air purifier that may be portably used by individuals may also be more suitable for the frequently moving users. Under the background, portable air purifiers that may be portably used by individuals are being developed.

The portable air purifier has the small size and a light weight such that the user easily carries the portable air purifier. The user may easily use the portable air purifier in a desired place while easily carrying the portable air purifier. That is, the portable air purifier may be suitable for users having a life pattern of frequently going out and moving several places rather than staying in one place such as at home for a long period of time.

The portable air purifier may perform various functions in addition to the simple air purification function based on the portability and the usability in various places.

For example, the portable air purifier may perform a function of a portable speaker in addition to the air purification function. In this case, it is not necessary to prepare both the portable air purifier and the portable speaker; instead, the air purification function and the function of the portable speaker may be selected as necessary or both functions may be used together with only portable air purifier.

Korean Utility Model Registration No. 20-0419797 and Korean Patent Publication No. 10-2014-0028848 exemplify an apparatus including an air purifier and a speaker.

Korean Utility Model Registration No. 20-0419797 discloses the air purifier with a built-in speaker. The air purifier to purify contaminated air in an indoor space includes the speaker. The speaker may be connected to a terminal socket disposed at one side of a housing of the air purifier, and the terminal socket may be connected to audio terminals such as a MPEG Audio Layer-3 player (MP3P), a compact disk player (CDP), and a portable multimedia player (PMP).

For the air purifier with the built-in speaker, the housing may include an additional space to accommodate the speaker and the terminal socket and a surface to expose the terminal socket to outside may be disposed in the housing thereof.

In addition, the housing of the air purifier with the built-in speaker may accommodate a speaker grill to transmit sound waves output from the speaker to the outside. The speaker grill may further include a suction inlet to suction air and a discharge outlet to discharge air.

Therefore, the size of the air purifier with the built-in speaker may be increased by a space to accommodate the speaker and the terminal socket and by an area of the housing to accommodate the suction inlet, the discharge outlet, and the speaker grill.

For this reason, it is difficult for the air purifier with the built-in speaker to have a size suitable for portability. In addition, the air purifier with the built-in speaker is not suitable for the portability because the air purifier with the built-in speaker may be connected to external devices such as the MP3P, the CDP, the PMP, and the like by wire through the terminal socket. Moreover, the air purifier with the built-in speaker may not be provided as a portable apparatus, but may be used with power connection when the air purifier with the built-in speaker is installed in a predetermined place.

In particular, for the air purifier with the built-in speaker, the air purifier and the speaker do not need to share any components needed for operations thereof except for the housing. That is, the function of the air purifier may be sufficiently performed even without the speaker and the function of the speaker may be sufficiently performed even without the air purifier.

Therefore, the air purifier with the built-in speaker may not provide a new effect by coupling the air purifier and the speaker, but may merely share a housing by the air purifier and the speaker.

KR 2019/0086116 A relates to a portable air purifier with a Bluetooth speaker. The air purifier comprises: an ionizer unit for charging fine dust from introduced air; an electrostatic filter unit for receiving an electrostatic filter for absorbing and removing the fine dust charged from the ionizer unit; a cylindrical lower case for receiving the ionizer unit and the electrostatic filter unit and having an inlet grille for introducing external air therein and provided at a lower side thereof; an upper case coupled to an upper portion of the lower case and configured to adjust an air discharge direction by rotation; a blowing fan fixed in the lower case and generating a flow of air by rotation; a Bluetooth module unit accommodated in the lower case to communicate with an external device in a Bluetooth manner; and a speaker unit fixed to the center of an air vent grille provided in an air vent of the upper case to play sound signals received through the Bluetooth module unit.

EP 3 683 073 A1 discloses a portable air purifier. The air purifier comprises: a case having an accommodation space in the interior, the accommodation space being open in the front and back; a fan assembly accommodated in the accommodation space and equipped with fans; a fan cover accommodated in the accommodation space and positioned in front of the fan assembly to be coupled therewith; and a filter module accommodated in the accommodation space and positioned behind the fan assembly, wherein the case comprises a first support surface protruding from the inner circumferential surface of the case and facing the fan cover from the rear of the fan cover, and a second support surface protruding from the inner circumferential surface of the case and facing at least a part of the filter module from the front of at least a part of same, and the fan cover and filter module are coupled in the front-to-back direction with the first support surface and second support surface therebetween to be fixed in the case.

CN 108 444 003 A relates to an air purifier including a microphone and a loudspeaker.

KR 101 994 906 B1 relates to a small air purifier having a Bluetooth speaker function.

### SUMMARY OF THE DISCLOSURE

It is an object of the present invention to provide a portable air purifier capable of performing an air purification function and an acoustic function.

It is another object of the present invention to provide a portable air purifier capable of purifying air or providing sound even when carrying outside a place where power can be connected, such as inside of a vehicle or indoors or in places where power connection is difficult.

It is another object of the present invention to provide a portable air purifier capable of performing the air purification function and the acoustic function without degrading an air purification performance of the portable air purifier and maintaining a compact shape without changes in outer shape and size thereof occurring due to the addition of the acoustic function. The objects are solved by the features of the independent claim.

For the portable air purifier according to an embodiment of the present disclosure, an acoustic portion is disposed between a fan cover located between a discharge outlet and a fan portion and a suction inlet, and at least a portion of the acoustic portion is exposed toward the discharge outlet through a cover hole penetrating the fan cover.

The portable air purifier may perform the air purification function and a sound transmission function with an apparatus and may provide purified air and the sound in a forward direction, that is, toward the user.

A battery may be disposed in an area rather than an area in which the filter portion and the fan portion are disposed, and the acoustic portion and a main circuit board are each disposed in the area in which the battery is disposed rather than the area in which the filter portion and the fan portion are disposed.

The portable air purifier may effectively reduce a possibility of an increase in flow resistance inside of the portable air purifier due to the acoustic portion, improper transmission of the sound due to air flow, or distortion of the sound.

The acoustic portion may have a small size and is disposed in a space between the fan cover and the battery or a space between the fan cover and the main circuit board.

With this configuration, it is possible to add a sound transmission function to the portable air purifier without the need to increase the size of the apparatus or reduce the size of components having high relevance between the size and the performance, such as the battery.

The acoustic portion may be disposed between a front panel defining a discharge outlet and the battery disposed under the fan portion.

The portable air purifier may include the front panel which functions as a speaker grill, thereby maintaining beautiful front appearance thereof, facilitating manufacturing thereof, and reducing manufacturing costs thereof.

According to an aspect of the present disclosure, a portable air purifier may include a case providing an accommodating space; a suction inlet defined at a first side of the case and a discharge outlet defined at a second side of the case, the suction inlet and the discharge outlet being arranged in a first direction; a fan portion accommodated in the accommodating space and disposed between the suction inlet and the discharge outlet; a fan cover accommodated in the accommodating space and disposed between the fan portion and the discharge outlet; and an acoustic portion accommodated in the accommodating space and disposed between the suction inlet and the discharge outlet.

According to another aspect of the present disclosure, a portable air purifier may include a case providing an accommodating space; a rear panel having a suction inlet and disposed at a first side of the case; a front panel having a discharge outlet and disposed at a second side of the case, the front panel and the rear panel facing each other in a first direction; a fan portion accommodated in the accommodating space between the suction inlet and the discharge outlet; an acoustic portion accommodated in the accommodating space between the rear panel and the front panel, the acoustic portion and the fan portion being arranged adjacent to each other; and a fan cover extending in the second direction and being disposed between the fan portion and the discharge outlet and between the acoustic portion and the discharge outlet; wherein the fan cover comprises a cover hole corresponding to the acoustic portion to provide a passage for communicating between the acoustic portion and the discharge outlet.

The portable air purifier according to any one of these aspects may include one or more of the following preferred features:

The fan portion and the acoustic portion may be arranged in a direction different from the first direction. The acoustic portion and the fan portion may be arranged adjacent to each other in a second direction perpendicular to the first direction or in a direction parallel to a plane of the front panel and/or of the rear panel.
The first side and the second side of the case may be opposite sides of the case, e.g. a front side and a rear side, respectively. The front panel and/or of the rear panel may extend in a plane perpendicular to the first direction. Between the suction inlet and the discharge outlet, a flow path may be defined passing through the fan portion. The acoustic portion may be accommodated within the accommodating space outside of the flow path.

The fan cover may include a first cover and a second cover. A portion of the fan cover disposed between the fan portion and the discharge outlet may be denoted as first cover. At least a portion of the first cover may be disposed between the fan portion and the discharge outlet. A portion of the fan cover disposed between the acoustic portion and the discharge outlet may be denoted as second cover. At least a portion of the second cover is disposed between the acoustic portion and the discharge outlet.

The first cover and the second cover may be arranged in a direction in parallel to the arrangement direction of the fan portion and the acoustic portion. The first cover and the second cover may be arranged in the same direction as the fan portion and the acoustic portion. The first cover and the second cover may be connected and/or integrally formed. The fan cover may extend in a plane parallel to the front panel and/or the rear panel.

The acoustic portion may be disposed between the suction inlet and the second cover.

The fan cover, in particular the second cover, may include a cover hole to provide a passage for communicating between the acoustic portion and the discharge outlet. At least a portion of the acoustic portion may be exposed toward the discharge outlet through the cover hole. The acoustic portion may be at least partially exposed through the cover hole and/or through the discharge outlet. The acoustic portion may be at least partially exposed through the cover hole toward the discharge outlet.

The acoustic portion may include a speaker case providing a speaker accommodating space. The speaker case may be disposed between the suction inlet and the second cover. The acoustic portion may include a speaker accommodated in the speaker accommodating space. The speaker may be accommodated in the speaker case.

The speaker case may include a rear case facing the rear panel and/or disposed between the suction inlet and the second cover. The speaker case may include a front case facing the discharge outlet and/or the front panel and/or disposed between the rear case and the discharge outlet. The front case may be coupled to the rear case and/or to the fan cover, i.e. to the second cover, between the rear case and the fan cover, i.e. the second cover. The front case may be disposed between the rear case and the fan cover, i.e. the second cover. The speaker case may include the speaker accommodating space surrounded by the rear case and the front case that are coupled to each other.

The front case may include a first case coupled to the fan cover. The first case may be disposed between the rear case and the second cover and coupled to the rear case and the second cover; The front case may include a second case inserted into the cover hole and/or coupled to the second cover.

The second case may protrude further than the first case toward the discharge outlet. The first case may be disposed at an outside of the second case on a plane orthogonal to the first direction. The second case may form a plane that protrudes further than the first case toward the discharge outlet. The second case may be connected to the first case.

The first case may be attached to the fan cover. The second case may be at least partially surrounded by the first case. The second case may be inserted into the cover hole and/or exposed by the cover hole. At least a portion of the first case may overlap with the at least a portion of the second cover in the first direction. A coupling member may be disposed between the first case and the second cover and may be configured to couple the first case to the second cover.

The coupling member may include an adhesive sheet having a first side in the first direction adhered to the first case and a second side in the first direction adhered to the second cover.

A speaker mounting portion may be disposed in the speaker case, e.g. on at least one of the rear case or the front case, to restrict the position of the speaker in the speaker accommodating space.

The speaker mounting portion may comprise a protruding rib that protrudes from one of the front case and the rear case toward the other one of the front case and the rear case. The speaker may be disposed between the protruding rib and the other one of the front case and the rear case to restrict the position of the speaker in the speaker accommodating space in the first direction. For example, the speaker mounting portion may include a protruding rib that protrudes from the front case toward the rear case. The speaker may be disposed between the protruding rib and the rear case. The speaker may be coupled to the speaker case.

The speaker mounting portion may further include a restraining protrusion that protrudes from the protruding rib toward the rear case. The restraining protrusion may be in contact with a side surface of the speaker in order to restrict the position of the speaker in the speaker accommodating space in a direction perpendicular to the first direction. The restraining protrusion may be configured to surround surrounding of the speaker disposed between the protruding rib and the rear case. At least a portion of the speaker may be inserted into a space surrounded by an end of the protruding rib and the restraining protrusion and the position of the speaker may be restrained.

The front case, in particular the second case, may include a hollow penetrating the same in the first direction such that the speaker is at least partially exposed. In particular, the speaker may be at least partially exposed toward the discharge outlet through the hollow of the front case. The protruding rib may surround the hollow. The protruding rib may define a hollow penetrating the protruding rib and the front case in the first direction. At least a portion of the speaker may be exposed toward the discharge outlet through the hollow of the protruding rib.

The speaker mounting portion may further comprise a front rib crossing the hollow in a direction perpendicular to the first direction, e.g. in a direction perpendicular to first direction, i.e. connecting two opposite points on the circumference of the hollow. The speaker may be disposed between the front rib and the rear case. The speaker mounting portion may further include a front rib accommodated in the front case and to pass through the hollow of the protruding rib in a direction perpendicular to the first direction. The at least a portion of the speaker may be disposed between the front rib and the rear case and may advantageously be coupled to the speaker case.

The portable air purifier may further include a board disposed between the rear panel and the acoustic portion or between the suction inlet and the acoustic portion, and/or coupled to the acoustic portion.

The fan cover may further include a board fastening boss that protrudes (e.g. from the second cover) toward the suction inlet. The board fastening boss may pass through the acoustic portion in the first direction. The board fastening boss may be coupled to the board.

The acoustic portion may include a boss avoiding portion defining a cutting portion at a portion of the acoustic portion that overlaps with the board fastening boss and the board in the first direction.

The acoustic portion may be fixed between the fan cover, e.g. the second cover, and the board coupled to each other.
An impact absorbing member may be disposed between the acoustic portion and the board.

The impact absorbing member may be made of elastically deformable material. The impact absorbing member may contact the acoustic portion and the board.

The fan cover may further include a fan cover rib that protrudes (e.g. from the second cover) toward the rear panel, e.g. toward the suction inlet. At least a portion of the fan cover rib may pass through between the fan portion and the acoustic portion.

The fan cover rib may protrude from the fan cover in the first direction and/or may surround the acoustic portion and the board. The fan cover rib may protrude from an outer edge of the second cover to one side in the first direction. The fan cover rib may extend along the outer edge of the second cover. The acoustic portion and the board may be each disposed in a space surrounded by the second cover and the fan cover rib.

The at least a portion of the fan cover rib may be cut.

According to the present disclosure, the portable air purifier may perform the air purification function and the sound transmission function with an apparatus, thereby improving satisfaction of the user desiring to perform various functions with one apparatus and achieving a high level of air purification performance and providing high level of sound quality.

According to the present disclosure, the portable air purifier may perform the air purification function or the acoustic function even when carrying or in places where power connection is difficult by providing a rechargeable battery to the apparatus.

According to the present disclosure, electric components related to the air purification function, such as the blowing fan, the filter portion, and the battery, and acoustic components related to the acoustic function, such as the acoustic portion, may be intensively accommodated in the case without affecting each other's functions. Therefore, the portable air purifier according to the present disclosure may have the compact shape, perform the air purification function and the acoustic function, and achieve the high level of air purification performance and acoustic performance.

According to the present disclosure, the acoustic portion may have the small size and may be disposed in a narrow space between the fan cover and the main circuit board, thereby adding the sound transmission function to the portable air purifier without the need to increase the size of the apparatus or reduce the size of the components having the high relevance between the size and the performance, such as the battery.

According to the present disclosure, the acoustic portion may be disposed in a space that is not used as an air flow path for the air purification, and the front panel may function also as the speaker grill, thereby maintaining the beautiful front appearance of the portable air purifier and easily and inexpensively manufacturing a structure to transmit the sound.

The present disclosure may provide the portable air purifier having a low risk of transmission of electromagnetic waves through a case, a light weight, the beautiful appearance, and excellent portability.

Further, according to the present disclosure, components such as the main circuit board that are vulnerable to impact may be effectively protected from external impact by the fan cover rib, thereby reducing a possibility of malfunction of the portable air purifier due to the external impact.

### BRIEF DESCRIPTION OF THE DRAWINGS

FIG. 1 is a front perspective view showing an example portable air purifier.
FIG. 2 is an exploded perspective view showing the portable air purifier of FIG. 1
FIG. 3 is a rear perspective view showing the portable air purifier of FIG. 1.
FIG. 4 is a rear exploded perspective view showing the portable air purifier of FIG. 3.
FIG. 5 is a cross-sectional view taken along line "V-V" of FIG. 1.
FIG. 6 is a front perspective view showing the case of FIG. 1.
FIG. 7 is a rear perspective view showing the case of FIG. 1.
FIG. 8 is a cross-sectional view of a structure of portion "VIII" of FIG. 5.
FIG. 9 is a perspective view showing an example fan portion.
FIG. 10 is a perspective view showing a fan case of FIG. 9.
FIG. 11 is a side view showing a fan of FIG. 9.
FIG. 12 is a front view showing the fan of FIG. 11.
FIG. 13 is a cross-sectional view taken along line "XIII-XIII" of FIG. 12.
FIG. 14 is an exploded perspective view showing a fan cover and fan portions.
FIG. 15 is an exploded perspective view showing a fan portion, a fan base, and a filter case.
FIG. 16 is a rear perspective view showing a rear surface of a fan base.
FIG. 17 is a perspective view showing a state of coupling between a fan base and a filter case.
FIG. 18 shows an example air flow pattern of a portable air purifier.
FIG. 19 is a front perspective view showing an example front panel removed from a portable air purifier.
FIG. 20 is a perspective view showing an acoustic portion of FIG. 19.
FIG. 21 is an exploded perspective view showing the acoustic portion of FIG. 20.
FIG. 22 is a plan cross-sectional view of the acoustic portion of FIG. 20.
FIG. 23 is a side cross-sectional view of the acoustic portion of FIG. 20.
FIG. 24 is a front exploded perspective view showing a front cover, a fan cover, an acoustic portion, and a main circuit board removed from a portable air purifier.
FIG. 25 is a rear exploded perspective view showing an example of a front cover, a fan cover, an acoustic portion, and a main circuit board removed from a portable air purifier.
FIG. 26 is a rear view showing a second cover of FIG. 25.
FIG. 27 is a rear view showing a state of coupling between the second cover of FIG. 26 and an acoustic portion.
FIG. 28 is a rear view showing a state of coupling between the second cover of FIG. 27 and a main circuit board
FIG. 29 is a rear view showing a state of connection between the main circuit board of FIG. 28 and a harness
FIG. 30 is a cross-sectional view of a structure of portion "XXX" of FIG. 5, where a battery is removed.

### DETAILED DESCRIPTION OF EXEMPLARY IMPLEMENTATIONS

Some embodiments of the present invention are described in detail with reference to accompanying drawings. Therefore, a person having ordinary knowledge in the art to which the present disclosure pertains will be able to easily embody the technical idea of the present disclosure. A detailed description of a well-known technology relating to the present disclosure may be omitted if it unnecessarily obscures the gist of the present invention.

Hereinafter, one or more embodiments of the present invention are described in detail with reference to the accompanying drawings. Same reference numerals may be used to refer to same or similar components.

Terms such as first, second, and the like may be used herein to describe various elements of the present disclosure; however, these elements are not limited by these terms. These terms are intended to distinguish one element from another element. A first element may be a second element unless otherwise stated.

The invention is defined in the claims.

Terms used in the present disclosure are only used to describe specific examples or embodiments, and are not intended to limit the present disclosure. As used herein, the singular forms "a", "an" and "the" are intended to include the plural forms as well, unless the context clearly indicates otherwise. It will be further understood that the terms "comprises" and/or "comprising," when used herein, specify the presence of stated features, integers, steps, operations, elements, components, or a combination thereof, but do not preclude the presence or addition of one or more other features, integers, steps, operations, elements, components, or a combination thereof

Terms such as first, second, and the like may be used herein to describe various elements of the present disclosure; however, the components are not limited by that terms. These terms are intended to distinguish one element from other elements.

Further, the terms "connected," "coupled," or the like are used such that, where a first component is connected or coupled to a second component, the first component may be directly connected or able to be connected to the second component, or one or more additional components may be disposed between the first and second components. Meanwhile, it should be understood that, when the first component is "directly connected" or "directly coupled" to the second component, one or more additional components may not be disposed between the first and second components.

In this document, the terms "upper," "lower," "on," "under," or the like are used such that, where a first component is arranged at "an upper portion" or "a lower portion" of a second component, the first component may be arranged in contact with the upper surface or the lower surface of the second component, or another component may be disposed between the first component and the second component. Similarly, where a first component is arranged on or under a second component, the first component may be arranged directly on or under (in contact with) the second component, or one or more other components may be disposed between the first component and the second component.

Unless otherwise defined, all terms (including technical and scientific terms) used herein have the same meaning as commonly understood by one of ordinary skill in the art to which the present disclosure pertains. It will be further understood that terms, such as those defined in commonly used dictionaries, should be interpreted as having a meaning that is consistent with their meaning in the context of the relevant art and will not be interpreted in an idealized or overly formal sense unless explicitly defined herein.

In the present disclosure, unless otherwise stated, "A and/or B" means A, B, or both. Unless otherwise stated, "C to D" means "C or more and D or less".

### [Appearance of portable air purifier]

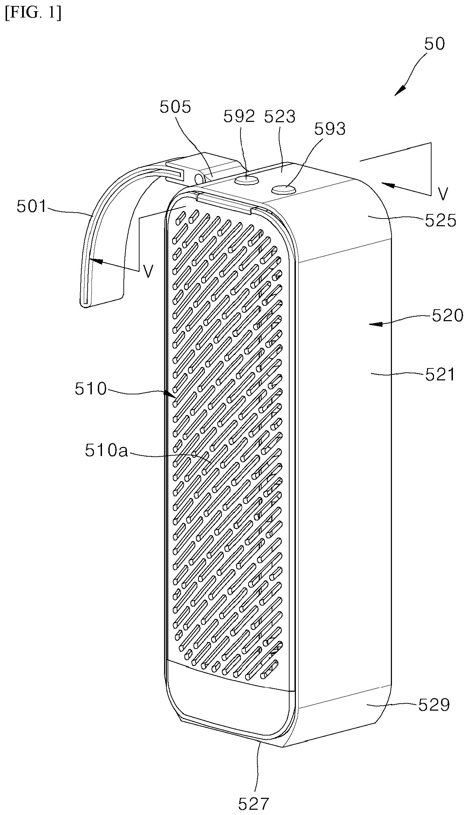

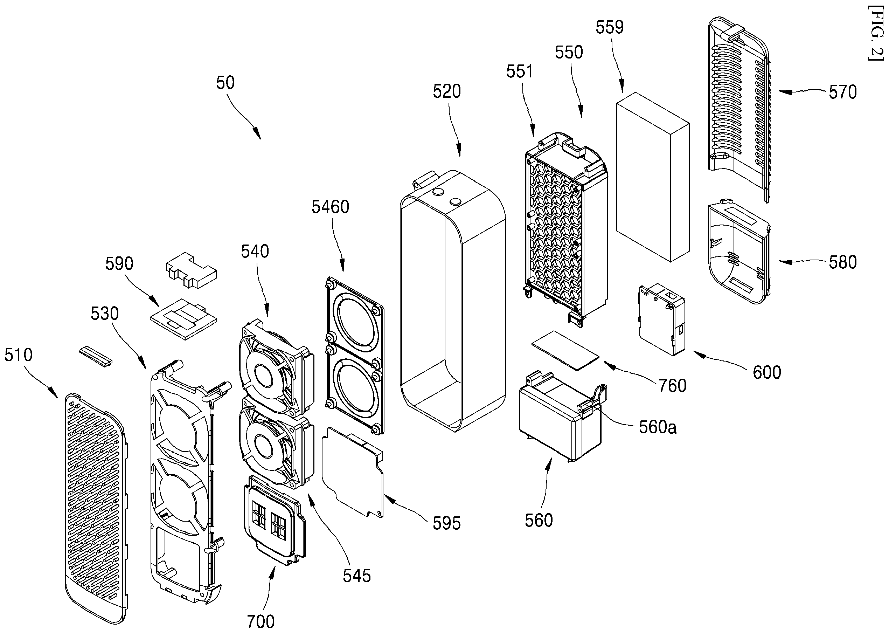

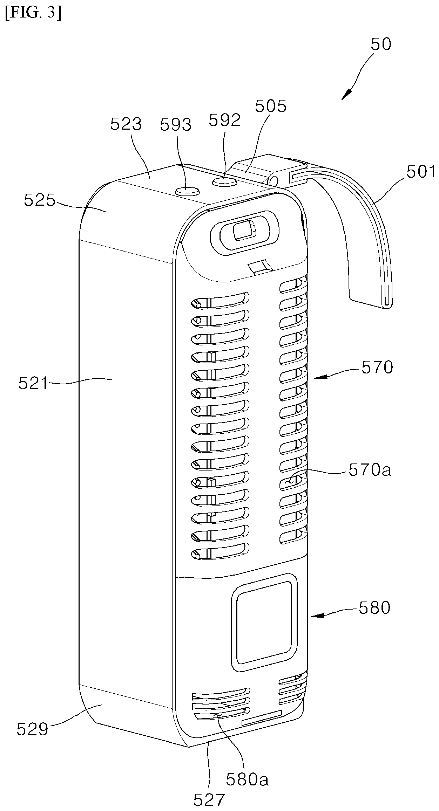

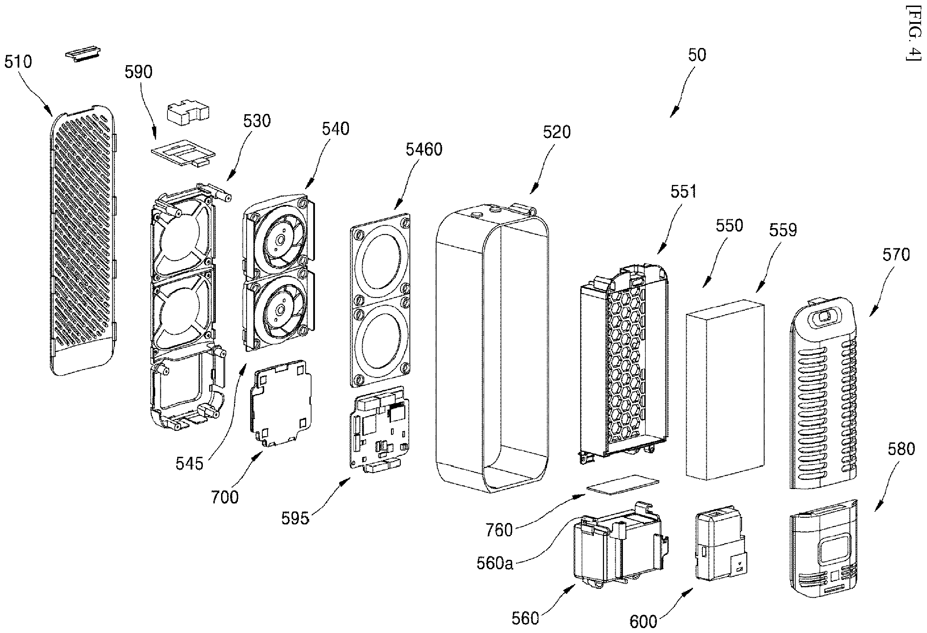

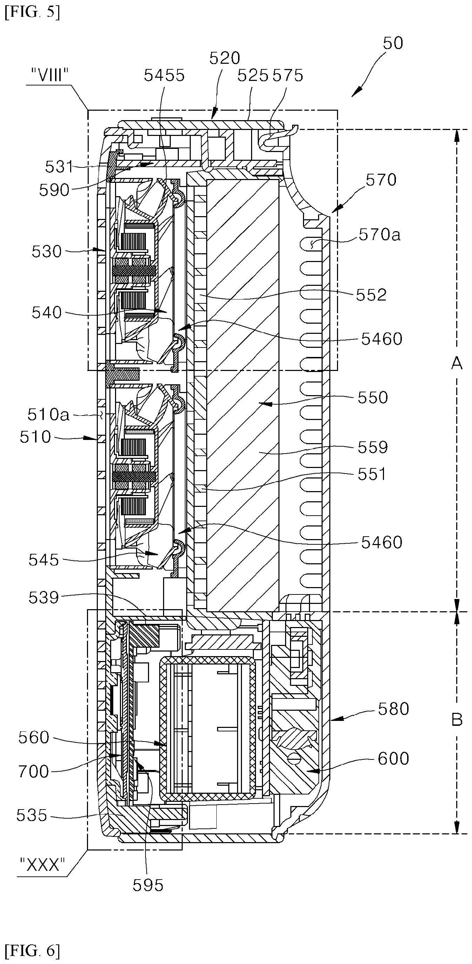

FIG. 1 is a front perspective view showing an example portable air purifier. FIG. 2 is a rear perspective view showing the portable air purifier of FIG. 1. In addition, FIG. 3 is a rear perspective view showing the portable air purifier of FIG. 1, FIG. 4 is a rear exploded perspective view showing the portable air purifier of FIG. 3, and FIG. 5 is a cross-sectional view taken along line "V-V" of FIG. 1.

Referring to FIGS. 1 to 5, the portable air purifier 50 according to an embodiment of the present disclosure may have an approximately hexahedral shape. The portable air purifier 50 includes a case 520, a front panel 510, and a rear panel 570.

The case 520 forms an external skeleton of the portable air purifier 50. A number of components are accommodated in the case 520.

The case 520 may have opening at both sides in a first direction. That is, the case 520 may have the openings at a front side and a rear side thereof. A suction surface may be disposed at a first side of the case 520 in the first direction and a discharge surface may be disposed at a second side of the case 520 in the first direction.

For example, the suction surface may be disposed at the rear side of the case 520, and the rear panel 570 may be disposed at the rear side of the case 520. In addition, the discharge surface may be disposed at a front side of the case 520 and a front panel 510 may be disposed at the front side of the case 520.

The suction surface refers to a virtual surface at the rear side of the case 520 and corresponding to a boundary between an inside of the case 520 and an outside of the case 520. Further, the discharge surface refers to a virtual surface at the front side of the case 520 and corresponding to a boundary between the inside of the case 520 and the outside of the case 520.

According to the present embodiment, as both the rear side and the front side of the case 520 are open, the suction surface and the discharge surface may be referred to as "opening" defined at the rear side and the front side of the case 520. In this embodiment, it is exemplified that the suction surface and the discharge surface are arranged in parallel to each other.

The front panel 510 is coupled to a front side of the case 520. The front panel 510 defines a front appearance of the portable air purifier 50.

The rear panel 570 is coupled to the rear side of the case 520. The rear panel 570 defines a rear appearance of the portable air purifier 50.

The portable air purifier 50 may have a vertical hexahedral shape with a long vertical length. The user may use the portable air purifier 50 in a vertical state or a laying state. In addition, even if the portable air purifier 50 is used in the laying state in a place where shaking occurs, such as an inside a vehicle, the portable air purifier 50 does not roll and may stably maintain its position.

Directions are defined. When an arrangement direction of the front panel 510 relative to the case 520 is referred to as "a forward direction" and an arrangement direction of the rear panel 570 relative to the case 520 is referred to as "a rearward direction", "the first direction" refers to a forward and rearward direction. In addition, the first direction may have the same meaning as an axial direction. The axial direction may be referred to as a direction in parallel to a longitudinal direction of a shaft of fan portions 540 and 545 described below. In addition, "a second direction" is a direction perpendicular to the first direction and refers to a horizontal direction. In addition, "a third direction" is a direction perpendicular to each of the first direction and the second directions and refers to a vertical direction.

### [Structure of portable air purifier]

According to this embodiment, a portable air purifier 50 includes a front panel 510, a case 520, a fan cover 530, fan portions 540 and 545, a filter portion 550, a battery 560, a rear panel 570, and a rear cover 580.

The front panel 510 is disposed at a foremost side of the portable air purifier 50 and defines a front appearance of the portable air purifier 50. Air purified by the portable air purifier 50 is discharged to outside through the front panel 510. For the air discharging, the front panel 510 includes a plurality of discharge outlets 510a.

The case 520 forms an external skeleton of the portable air purifier 50. An upper appearance, a side appearance, and a lower appearance of the portable air purifier 50 are defined by the case 520. The case 520 includes an accommodating space to accommodate various components of the portable air purifier 50 such as the fan cover 530, the fan portions 540 and 545, the battery 560, and the filter portion 550. The case 520 advantageously has sufficient strength to protect the accommodated components from external impact.

The fan cover 530 is accommodated in the accommodating space inside of the case 520 and is disposed at a front side of the fan portions 540 and 545. That is, the fan cover 530 is disposed between the front panel 510 and the fan portions 540 and 545 in the case 520.

The fan cover 530 couples the fan portions 540 and 545 to the inside of the case 520. In addition, the fan cover 530 also induces air flow to block spread of the air blown by the fan portions 540 and 545 to the surroundings and move straight forward. In addition, the fan cover 530 may couple the filter portion 550 and the battery 560.

The fan portions 540 and 545 may be accommodated in the accommodating space inside of the case 520 and may be disposed between a discharging surface and the filter portion 550. For example, the fan portions 540 and 545 may be disposed between the fan cover 530 and the filter portion 550. That is, the fan portions 540 and 545 may be disposed at a rear side of the fan cover 530 and at a front side of the filter portion 550. The fan portions 540 and 545 suction air from the rear of the portable air purifier 50 and discharge the air to the front thereof.

In this embodiment, it is exemplified that the fan portions 540 and 545 each include a mixed flow fan. The fan portions 540 and 545 may suction the air that has passed through the filter portion 550 in the axial direction and discharge the air in a direction between the axial direction and the radial direction.

The filter portion 550 is accommodated in the accommodating space inside of the case 520 and is disposed between the fan portions 540 and 545 and the rear panel 570. That is, the filter portion 550 is disposed at the rear side of the fan portions 540 and 545 and at the front side of the rear panel 570.

The filter portion 550 purifies the air suctioned through the rear side of the portable air purifier 50. The air purified while passing through the filter portion 550 is discharged to a space in front of the portable air purifier 50 through the fan portions 540 and 545, the fan cover 530, and the front panel 510.

The filter portion 550 may include a filter case 551 and a filter 559.

The filter case 551 forms an external skeleton of the filter portion 550. In this embodiment, it is exemplified that the filter case 551 has a hexahedral shape with an open rear surface. The filter case 551 includes an insertion space to accommodate the filter 559. In addition, the filter case 551 has an opening at a rear side thereof and provides a passage to insert the filter 559 into the insertion space of the filter case 551.

The filter 559 is inserted into the insertion space of the filter case 551. A seating groove or a seating protrusion may be defined on an inner surface of the filter case 551 to firmly mount the filter 559 inside of the filter case 551.

Further, the filter case 551 includes a through-hole 551a to provide a passage between the insertion space and the fan portions 540 and 545. The through-hole 551a penetrates a front surface of the filter case 551 in the frontward and rearward directions. The through-hole 551a provides the passage to flow the air passing through the filter 559 toward the fan portions 540 and 545.

The filter case 551 includes a plurality of through-holes 551a on the front surface thereof and each of the through-holes 551a penetrates the front surface of the filter case 551 in a forward and rearward direction.

In the present embodiment, it is exemplified that the filter case 551 includes the plurality of through-holes 551a on the front surface thereof and each of the through-holes 551a has a hexagonal shape. In addition, the plurality of through-holes 551a are arranged in a honeycomb configuration, and accordingly, the filter case 551 may have the honeycomb structure on the front surface thereof.

The filter case 551 has the honeycomb structure on the front surface thereof, thereby providing the passage to flow air, obtaining rigidity, and achieving a lightweight of the filter case 551.

The battery 560 is accommodated in the accommodating space inside of the case 520 and is disposed under the fan portions 540 and 545, and the filter portion 550. The battery 560 may supply power to drive the portable air purifier 50. For the power supply, the battery 560 may be electrically connected to at least one of the fan portions 540 and 545, the filter portion 550, a sub circuit board 590, or a main circuit board 595 described below.

The rear panel 570 is disposed at a rearmost side of the case 520 together with a rear cover 580 and defines a rear appearance of the portable air purifier 50. The rear panel 570 is disposed at a rear side of the filter portion 550. External air is suctioned into the portable air purifier 50 through the rear panel 570. For the air suction, the rear panel 570 includes a plurality of first suction inlets 570a.

The rear panel 570 is coupled to the filter case 551 to cover the open rear side of the case 520. The rear panel 570 may further include a rear panel locking portion 575. The rear panel locking portion 575 firmly couples the rear panel 570 to the rear side of the case 520.

The rear panel locking portion 575 protrudes from an upper side of the rear panel 570. The rear panel locking portion 575 may be coupled to a protruding supporter 555 disposed on the filter case 551 and may be coupled to the filter case 551.

For example, the rear panel locking portion 575 may have a hook shape. The rear panel locking portion 575 may be coupled to the protruding supporter 555 of the filter case 551 using the hook.

In addition, the rear cover 580 is disposed at the rearmost side of the case 520 together with the rear panel 570 and defines the rear appearance of the portable air purifier 50. The rear cover 580 is disposed at a rear side of the battery 560. According to this embodiment, a rear area of the filter portion 550 is covered by the rear panel 570. In addition, a rear area of the battery 560 is covered by the rear cover 580.

The rear cover 580 may include a second suction inlet 580a. The second suction inlet 580a passes through the rear cover 580. The second suction inlet 580a provides a passage to connect the rear of the case 520 and the battery 560 and the sensor portion 600. External air may be introduced into the battery 560 and the sensor portion 600 in a second area (B) through the second suction inlet 580a.

In addition, the portable air purifier 50 may include an acoustic portion 700. The acoustic portion 700 may be disposed in an accommodating space inside of the case 520 similar to other components. The acoustic portion 700 may be operated by a power supplied by the battery 560 and may convert an electric signal into sound wave and output the sound wave. Details of the acoustic portion 700 are described below.

### [Structure of case]

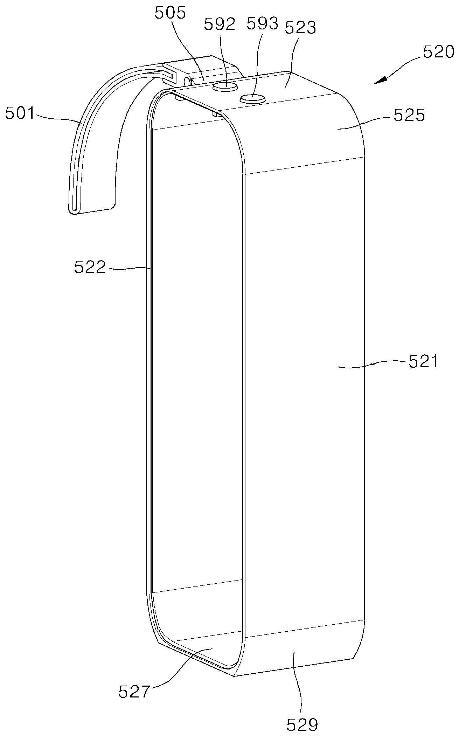

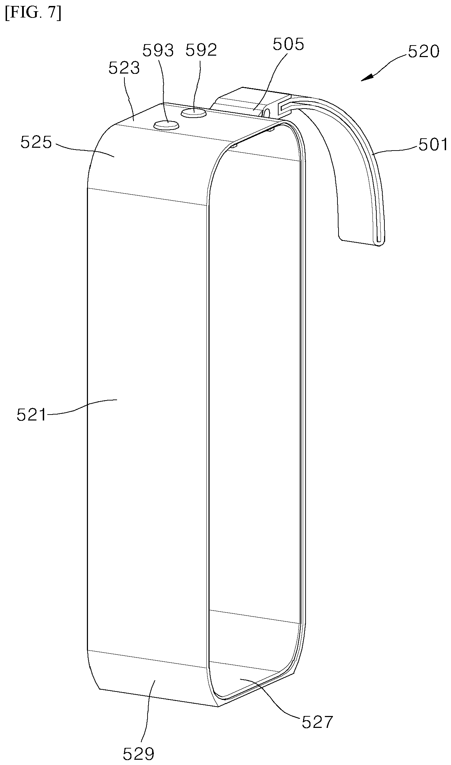

FIG. 6 is a front perspective view showing a case in FIG. 1. FIG. 7 is a rear perspective view showing a case of FIG. 1.

Referring to FIGS. 3, 6, and 7, a portable air purifier 50 includes a case 520 to form an external skeleton thereof. The case 520 includes an accommodating space and the accommodating space has openings at a front side and a rear side in a first direction.

Directions are defined. When an arrangement direction of a front panel 510 relative to the case 520 is a forward direction and an arrangement direction of a rear panel 570 relative to the case 520 is a rearward direction, "a first direction" refers to a forward and rearward direction. In addition, "a second direction" is a direction perpendicular to the first direction and refers to a horizontal direction. In addition, "a third direction" is a direction perpendicular to each of the first direction and the second direction and refers to a vertical direction.

According to this embodiment, the case 520 has a hexahedral shape defining openings at a front side and a rear side thereof and includes an accommodating space defining the openings at the front side and the rear side thereof. The case 520 may be made of metal. According to this embodiment, it is exemplified that the case 520 is made of aluminum having a light weight and high strength.

A rear surface of the case 520 is opened to suction external air. In addition, the front surface of the case 520 is opened to discharge the air purified in the accommodating space inside of the case 520. Various components of the portable air purifier 50 may be accommodated in the accommodating space of the case 520 through the open front surface and rear surface of the case 520.

A filter portion 550 is accommodated in or removed from the case 520 through the open rear surface of the case 520. A rear panel 570 is coupled to the opened rear surface of the case 520. The rear panel 570 coupled to the case 520 covers the open rear surface of the case 520.

The case 520 has a hexahedral shape with the openings at the front side and the rear side thereof and may include a first surface 521, a second surface 523, a first connection surface 525, a third surface 527, and a second connection surface 529.

The first surface 521 is perpendicular to the second direction which is perpendicular to the first direction. The first surface 521 defines a side surface of the case 520. The first surface 521 defines a vertical plane that forms the wall blocking a side of the accommodating space inside of the case 520.

The case 520 includes a pair of first surfaces 521, and the pair of first surfaces 521 face each other and are spaced apart from each other by a predetermined distance. In this case, the first surfaces 521 are disposed side by side with each other in the second direction, that is, a lateral direction.

The second surface 523 is perpendicular to the third direction and is disposed at one side in the third direction of the pair of first surfaces 521. That is, the second surface 523 is disposed above the first surface 521 and defines a plane in parallel to a separation direction of the pair of first surfaces 521, that is, a horizontal plane. The second surface 523 forms an upper surface of the case 520.

A first connection surface 525 is disposed between the first surface 521 and the second surface 523. The first connection surface 525 is disposed between a first end of the second surface 523 and the first surface 521 disposed below the first end of the second surface 523, and a second end of the second surface 523 and the first surface 521 disposed below the second end of the second surface 523.

Each of the first connection surfaces 525 connects the first surface 521 and the second surface 523 in a rounded manner. The first connection surface 525 defines a rounded upper corner of the case 520 connecting the first surface 521 to the second surface 523, thereby improving safety and appearance beauty of the product.

The third surface 527 is disposed below each of the second surface 523 and the first surface 521 and forms a plane in parallel to the second surface 523. The third surface 527 forms a bottom surface of the case 520. In addition, the third surface 527 supports the portable air purifier 50 to maintain a vertical state of the portable air purifier 50.

A second connection surface 529 is disposed between the first surface 521 and the third surface 527. The second connection surfaces 529 are disposed between a first end of the third surface 527 and the first surface 521 disposed above the first end of the third surface 527, and between a second end the third surface 527 and the first surface 521 disposed above the second end of the third surface 527.

Each of the second connection surfaces 529 connects the first surface 521 to the third surface 527 in a rounded manner. The second connection surface 529 defines a rounded upper corner of the case 520 connecting the first surface 521 to the third surface 527, thereby improving safety and appearance beauty of the product.

A power button 592 may be disposed on the case 520, that is, on the second surface 523 of the case 520. The power button 592 is provided as an operation button to turn on/off the power of the portable air purifier 50.

In addition, an air volume control button 593 may also be disposed on the case 520. The air volume control button 593 is provided as an operation button to increase or decrease the air volume of the portable air purifier 50. The air volume control button 593 may be disposed adjacent to the power button 592 to facilitate user identification and user operation.

In addition, a strap coupler 505 may be disposed on the case 520 to couple a strap 501 to the case 520. The strap 501 is provided for the user to hold by hand. The user may lift the portable air purifier 50 by grabbing the strap 501 instead of holding the portable air purifier 50 with hands. That is, portability of the portable air purifier 50 may be improved by the strap 501.

An accommodating space inside of the case 520 may be divided into a first area (A) and a second area (B). When the accommodating space is divided vertically, an upper area is the first area (A) and a lower area is the second area (B). The first area (A) and the second area (B) are not physically divided, but are only conceptually divided.

According to this embodiment, the fan portions 540 and 545 and the filter portion 550 are disposed in the first area (A), and a battery 560 is disposed in the second area (B) among the components accommodated in the accommodating space.

### [Arrangement structure of components of portable air purifier]

Referring to FIGS. 1 to 5, an accommodating space inside a case 520 forming a skeleton of a portable air purifier 50 is divided into an upper first area (A) and a second area (B).

Components related to suction, purification, and discharging of air are disposed in the first area (A). That is, a filter portion 550 and fan portions 540 and 545 are each disposed in the first area (A) and the air flows in the first area (A). A rear panel 570 includes a plurality of first suction inlets 570a as a passage to suction the air. A fan cover 530 and a front panel 510 define air discharging portions 532 and 533 and discharge outlets 510a in the first area (A) as a passage to discharge the purified air. Further, a flow path to connect the first suction inlet 570a, the air discharging portions 532 and 533, and the discharge outlet 510a is provided in the first area (A).

That is, the first suction inlet 570a, a filter portion 550, fan portions 540 and 545, the air discharging portions 532, 533, and the discharge outlet 510a are each disposed in the first area (A) and a flow path to pass air suctioned into the portable air purifier 50 through an inside of the portable air purifier 50 is provided in the first area (A).

Components that are not directly related to the air flow for air purification are disposed in the second area (B). That is, a main circuit board 595, a battery 560, and a sensor portion 600 are each disposed in the second area (B). A rear cover 580 covers an open rear side of a space where the components are disposed.

According to the present embodiment, the case 520 has a hexahedral shape and a vertical length of the case 520 is longer than a lateral length of the case 520. In addition, the first area (A) disposed at the upper portion thereof has a longer vertical length than that of the second area (B) disposed at the lower portion thereof. That is, when the portable air purifier 50 is in a vertical state, the upper first area (A) occupies a wider area than that of the lower second area (B) in the case 520.

A second cover 535 of the fan cover 530 is disposed at a foremost side of the second area (B). The battery 560 is disposed in the second area (B) and behind the second cover 535. The fan portions 540 and 545 and the filter portion 550 are each disposed on the battery 560 and a rear cover 580 is disposed behind the battery 560. In addition, a sensor portion 600 may be disposed between the battery 560 and the rear cover 580.

That is, the battery 560 is accommodated in a space having an upper boundary surface defined by the fan portions 540 and 545 and the filter portion 550, a side boundary surface and a lower boundary surface defined by the first surface 521 and the third surface 527 of the case 520, and a rear boundary surface defined by the rear cover 580.

According to the present embodiment, the battery 560 has a heavier weight than that of the fan portions 540 and 545 and the filter portion 550. Advantageously, the battery 560 may have the weight heavier than a combined weight of the fan portions 540 and 545 and the filter portion 550.

As the weight per unit volume of the battery 560 is heavier than the weight per unit volume of the fan portions 540 and 545 and the filter portion 550, even if the weight or a size of the battery 560 is not artificially increased, it is not difficult for the battery 560 to have the heavier weight than that of the fan portions 540 and 545 and the filter portion 550.

That is, even if the battery 560 having a capacity needed to normally use the portable air purifier 50 is used for the portable air purifier 50, the battery 560 may be provided as a product heavier than the fan portions 540 and 545 and the filter portion 550.

When the battery 560 as the heavy product is disposed at a lower portion of the portable air purifier 50, the following effects may be provided.

First, when the battery 560 as the heavy product is disposed at the lower portion of the portable air purifier 50, a center of gravity of the portable air purifier 50 is biased to the bottom from a vertical center. That is, the center of gravity of the portable air purifier 50 is biased toward the bottom of the portable air purifier 50 in which the battery 560 is disposed.

When the center of gravity of the portable air purifier 50 is biased toward the bottom of the portable air purifier 50 in which the battery 560 is disposed, a risk of conduction of the portable air purifier 50 is lowered when the portable air purifier 50 is in the vertical state.

That is, when the portable air purifier 50 is in the vertical state, the center of gravity of the portable air purifier 50 is provided at the lower side based on the battery 560 disposed at the lower portion of the portable air purifier 50. In this case, the portable air purifier 50 may not fall down easily.

For the portable air purifier 50 of the present embodiment, the third surface 527 of the case 520 has a larger area than that of the second surface 523. That is, the third surface 527 has a lateral length that is longer than that of the second surface 523. That is, when a lateral length of the third surface 527 is "d1" and a lateral length of the upper surface 523 is "d2", relation of d1>d1 is satisfied. In addition, the second connection surface 529 connecting the third surface 527 to the first surface 521 forms a curved surface having value R less than that of the first connection surface 525.

The third surface 527 of the case 520 contacts a floor thereof when the portable air purifier 50 is in the vertical state. That is, the third surface 527 supports the portable air purifier 50 to maintain the vertical state of the portable air purifier 50.

The third surface 527 of the case 520 forms a plane with a larger area than that of the second surface 523 such that the third surface 527 of the case 520 stably supports the portable air purifier 50 in the vertical state.

That is, a structure in which the battery 560 is disposed at the lower portion of the portable air purifier 50 to provide the center of gravity of the portable air purifier 50 at the lower side and a structure in which the third surface 527 of the case 520 to support the portable air purifier 50 in the vertical state has the wider area than that of the second surface 523 may be combined to effectively inhibit occurrence of the conduction of the portable air purifier 50 and stably maintain the vertical state of the portable air purifier 50.

Second, when the battery 560 as the heavy product is disposed at the lower portion of the portable air purifier 50, other components of the portable air purifier 50, for example, the filter portion 550 and the fan portions 540 and 545 may be disposed above the battery 560. That is, components related to suction, purification, and dischargomg of air may be disposed higher than the battery 560.

In order to obtain the charging capacity of the battery 560 to smoothly use the portable air purifier 50, the battery 560 may have a size that is larger than a predetermined size. Therefore, the portable air purifier 50 needs an installation space of a predetermined size or more for installing the battery 560. In addition, as it is unreasonable to provide a flow path for the air flow in the space where the battery 560 is disposed, the components related to the air suction, the air purification, and the air discharging may be provided at positions other than the position of the battery 560, that is, the position higher than that of the battery 560.

With this arrangement structure, the flow path for the suction, the purification, and the discharging of the air in the portable air purifier 50 is provided in the first area (A), which is disposed higher than the battery 560. Accordingly, the air is suctioned to the portable air purifier 50 and the air purified by the portable air purifier 50 is discharged higher than the battery 560.

When the purified air is discharged from the upper portion of the portable air purifier 50, the air purified by the portable air purifier 50 easily reaches the face of the user.

When the portable air purifier 50 is placed on the floor that is lower than the face of the user, it is more advantageous to use the portable air purifier 50 in the vertical state than using the portable air purifier 50 in a horizontal state to increase an amount of air purified by the portable air purifier 50 reaching the face of the user.

When the purified air is discharged from the upper portion of the portable air purifier 50 in a state in which the portable air purifier 50 is in the vertical state, the amount of air purified by the portable air purifier 50 reaching the face of the user may be increased.

According to the present embodiment, as the battery 560 is disposed at the lower portion of the portable air purifier 50, the flow path for the air suction, the air purification, and the air discharging in the portable air purifier 50 is disposed higher than the battery 560. Accordingly, the purified air is also discharged from the upper portion of the portable air purifier 50, thereby further increasing the amount of air purified by the portable air purifier 50 reaching the face of the user.

That is, as the battery 560 is disposed at the lower portion of the portable air purifier 50, structural stability of the portable air purifier 50 is improved to reduce the risk of conduction of the portable air purifier 50 in the vertical state and an efficient flow path may be provided to increase the amount of air purified by the portable air purifier 50 reaching the face of the user.

Third, a structure in which the battery 560, which is the heavy object, is disposed at the lower portion of the portable air purifier 50 and components related to suction, purification, and discharge of air are disposed higher than the battery 560 may also contribute to expansion of an installation range of the portable air purifier 50.

For example, when the portable air purifier 50 is supported in a cup holder (h) in a vehicle, the air suction area and the purified air discharge area are each disposed higher than the cup holder such that the portable air purifier 50 maintains a high level of air purification performance while being stably supported in the vehicle. For the stable supporting, a vertical length of the second area (B) where the battery 560 is disposed is advantageously set to be equal to or larger than a depth of the cup holder.

As another example, if the lower area of the portable air purifier 50 is fixed using a clamp-type holder, the portable air purifier 50 may be stably coupled without blocking the air suction area and the purified-air discharge area of the portable air purifier 50.

That is, components that are not directly related to the air flow for the air purification, such as the battery 560, are disposed at the lower portion of the portable air purifier 50, and the portable air purifier 50 is supported and coupled by the components disposed at the lower portion of the portable air purifier 50, thereby achieving a high level of air purification performance of the portable air purifier 50and stably fixing the portable air purifier 50.

### [Arrangement structure of fan portion and filter portion]

A portable air purifier 50 of the present embodiment may include fan portions 540 and 545 to suction air from a rear side of the portable air purifier 50 and discharge the air to the front.

The fan portions 540 and 545 may be disposed between a fan cover 530 and a filter portion 550. That is, the fan cover 530 may be disposed at a front side of the fan portions 540 and 545 and the filter portion 550 may be disposed at a rear side of the fan portions 540 and 545.

The fan portions 540 and 545 may be accommodated in an accommodating space inside of a case 520 and may be disposed in first area (A). The fan portions 540 and 545 may be provided at a position facing a rear surface of a first cover 531 among the first cover 531 and a second cover 535 of the fan cover 530.

In this embodiment, it is exemplified that the portable air purifier 50 includes two fan portions 540 and 545. The portable air purifier 50 includes a first fan portion 540 and a second fan portion 545.

The first fan portion 540 may be disposed between a discharge surface and the filter portion 550, for example, between the fan cover 530 and the filter portion 550. In this case, the first fan portion 540 may be disposed in parallel to each of a suction surface and the discharge surface. In addition, the second fan portion 545 and the first fan portion 540 may be disposed on the same surface. That is, the second fan portion 545 may be disposed between the fan cover 530 and the filter portion 550 in parallel to each of the suction surface and the discharge surface.

The first fan portion 540 and the second fan portion 545 do not overlap with each other in a third direction. The first fan portion 540 and the second fan portion 545 may be disposed in the third direction, that is, in a vertical direction. That is, the first fan portion 540 and the second fan portion 545 may be disposed on a same vertical line.

In addition, the first fan portion 540 and the second fan portion 545 may face air discharging portions 532 and 533 of the fan cover 530. Air may be suctioned into the first fan portion 540 and the second fan portion 545 through the rear panel 570, may pass through the upper air discharging portion 532 and the lower air discharging portion 533, and may be discharged forward through the front panel 510.

In this embodiment, it is exemplified that the first fan portion 540 and the second fan portion 545 has a same size and shape. Alternatively, the first fan portion 540 and the second fan portion 545 may have different sizes and shapes.

The filter portion 550 may be disposed between the suction surface and the fan portions 540 and 545. The filter portion 550 includes a filter 559 to filter the air introduced through the suction surface.

The filter 559 may define a filter surface forming a plane orthogonal to air suction and discharge directions of the fan. That is, the filter 559 may define the filter surface in parallel to each of the suction surface and the discharge surface. The suction surface, the filter surface of the filter 559, and the discharge surface may be arranged in a straight line.

In addition, the filter 559 may define the filter surface in parallel to the fan portions 540 and 545. The suction surface, the filter surface, the fan portions 540 and 545, and the discharging surface may be arranged on the straight line.

In addition, positions of the first fan portion 540 and the second fan portion 545 in the first direction and the second direction may correspond to positions whithin an area occupied by the filter surface. In addition, the area occupied by the first fan portion 540 and the second fan portion 545 may correspond to an area of the filter surface. That is, the first fan portion 540 and the second fan portion 545 may overlap with the filter surface when viewed from the front.

In addition, the air suction direction of the first fan portion 540 and the second fan portion 545 may be the same direction as the arrangement direction of the suction surface and the discharge surface. That is, the first fan portion 540 and the second fan portion 545 may suction the air in the first direction or the axial direction.

The area occupied by the fan portions 540 and 545 and including the first fan portion 540 and the second fan portion 545 may correspond to the area of the suction surface and the filter surface. In addition, the area occupied by the fan portions 540 and 545 may correspond to the area of the discharge surface. When the areas of the suction surface, the filter surface, and the discharge surface correspond to each other, the area occupied by the fan portions 540 and 545 may correspond to that of each of the suction surface, the filter surface, and the discharge surface.

Therefore, the fan portions 540 and 545 may suction and discharge the air through the suction surface and the discharge surface.

For example, the fan portions 540 and 545 may suction the air through the suction surface having an area corresponding to the area of the fan portions 540 and 545. In addition, the air suctioned through the suction surface may be filtered through the suction surface and the filter surface having an area corresponding to the area of the fan portions 540 and 545. In addition, the fan portions 540 and 545 may discharge the air through the discharge surface having an area corresponding to the area of the fan portions 540 and 545.

That is, the suction surface and the discharge surface may provide a passage having an optimum area to suction and discharge the air by the fan portions 540 and 545. In addition, the filter surface having an optimum area to filter the air suctioned through the suction surface may be obtained by the filter 559. Therefore, air may flow effectively based on operations of the fan portions 540 and 545.

In addition, according to the present embodiment, the suction surface, the filter surface, the fan portions 540 and 545, and the discharging surface are arranged in parallel to one another. In addition, the suction surface, the filter surface, the fan portions 540 and 545, and the discharge surface are disposed along the first direction, and the air may also flow in the same direction. That is, the fan portions 540 and 545 may flow the air in the same linear direction as the arrangement direction of the suction surface, the filter surface, the fan portions 540 and 545, and the discharge surface.

When the air flows in the linear direction, air flow resistance is reduced, thereby facilitating the air flow. Therefore, as the fan portions 540 and 545 suction a sufficient amount of air and discharge a sufficient amount of air corresponding thereto, the air purification performance of the portable air purifier 50 may be improved.

### [Structure of fan portion]

A portable air purifier 50 according to the present embodiment may include a plurality of fan portions 540 and 545. In this embodiment, it is exemplified that the portable air purifier 50 includes a first fan portion 540 and a second fan portion 545 that have the same structure as each other. Only the structure of the first fan portion 540 is described hereinafter.

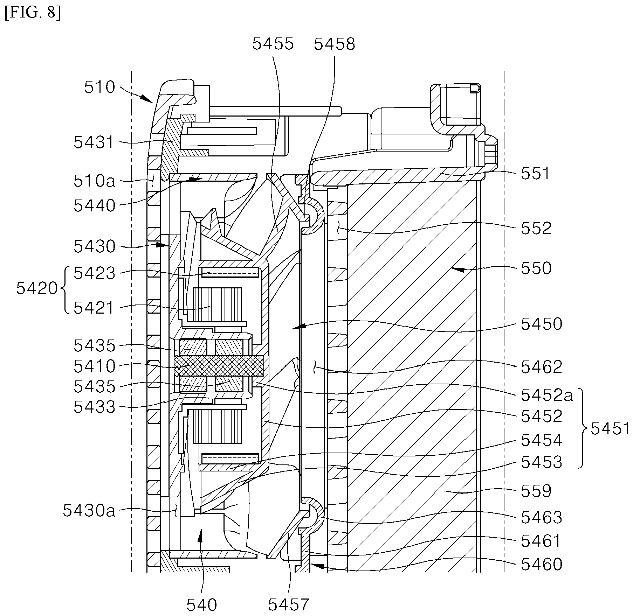

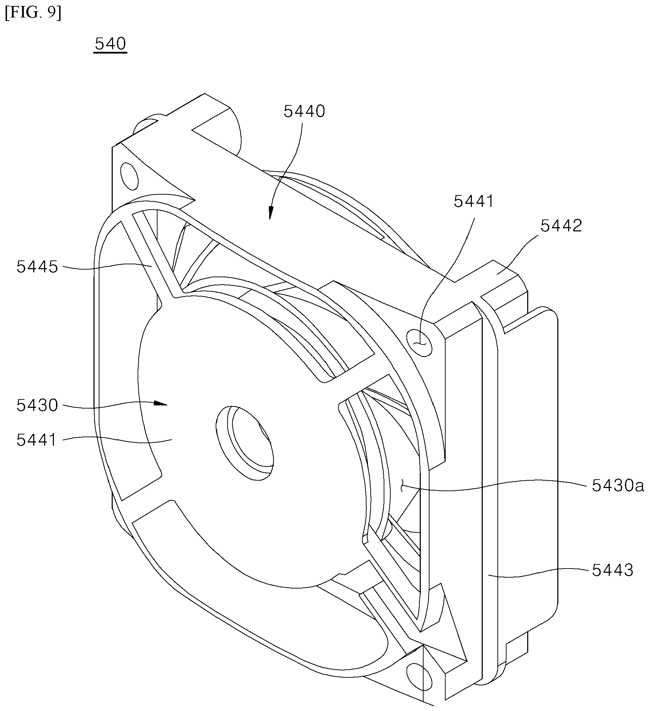

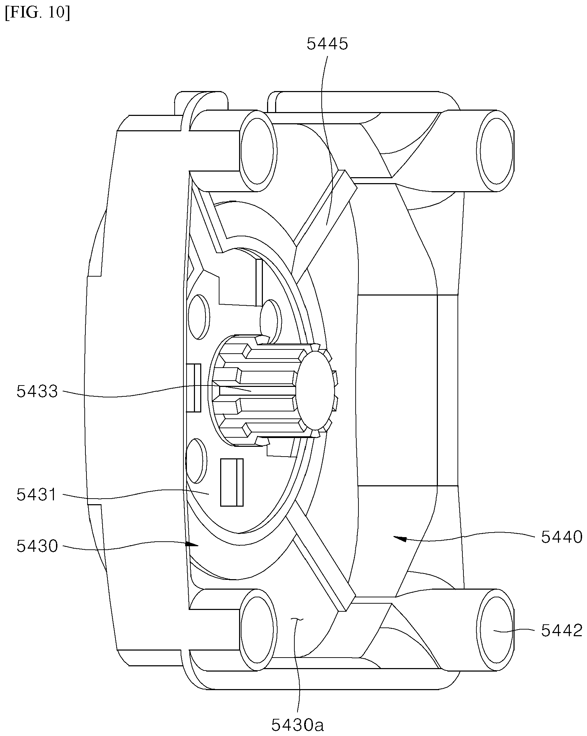

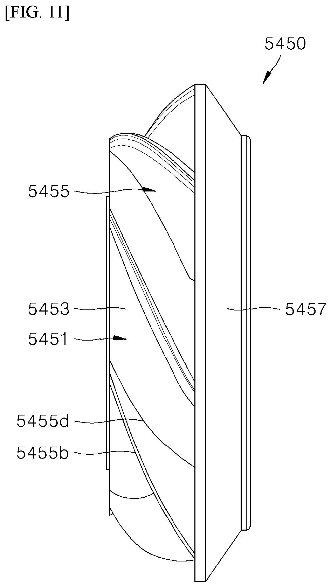

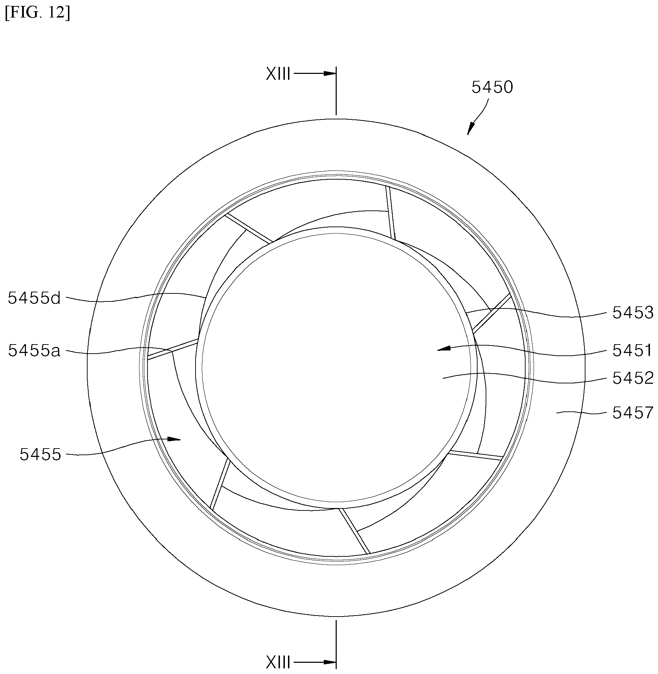

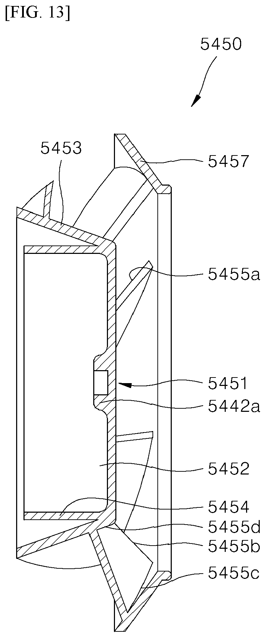

FIG. 8 is a cross-sectional view of a structure of portion "VIII" of FIG. 5. FIG. 9 is a perspective view showing an example fan portion. FIG. 10 is a perspective view showing a fan case of FIG. 9. In addition, FIG. 11 is a side view showing a fan of FIG. 9, FIG. 12 is a front view of the fan of FIG. 11, and FIG. 13 is a cross-sectional view taken along line "XIII-XIII" of FIG. 12.

In FIG. 8, some configurations of the portable air purifier are omitted.

Referring to FIGS. 3, 5, 8, and 9, the first fan portion 540 may include a shaft 5410, a motor 5420, a fan case 5430, and a fan 5440.

The shaft 5410 may extend in a first direction, that is, an axial direction. A first side of the shaft 5410 in the axial direction may be connected to a fan 5450. In addition, a second side of the shaft 5410 in the axial direction may be connected to the fan case 5430. Details thereof are described below.

The motor 5420 is connected to the fan 5450 to apply a rotational force to the fan 5450. For example, the motor 5420 may be a frequency-adjustable BLDC motor. The motor 5420 may include a stator 5421 and a rotor 5423.

The stator 5421 may be disposed at a radial center side of the motor 5420 and the rotor 5423 may be disposed at a radial outer side of the stator 5421. That is, the motor 5420 of the present embodiment may be an outer type motor.

The stator 5421 may be coupled to the fan cases 5430 and 5440. In addition, the rotor 5423 may be coupled to the fan 5450. The rotor 5423 may be rotated about the shaft 5410 outside of the stator 5421, and the fan 5450 may be rotated together with the rotor 5423 based on the rotation of the rotor 5423.

The fan cases 5430 and 5440 may support the stator 5421 and the shaft. The fan cases 5430 and 5440 may include a first supporter 5430 and a second supporter 5440 as shown in FIGS. 8 to 10.

The first supporter 5430 may be disposed at a radial center portion of the fan cases 5430 and 5440. The first supporter 5430 may include a supporting plate 5431 and a boss 5433.

The supporting plate 5431 may have a disk shape. The supporting plate 5431 may form a plane in parallel to at least one of a suction surface, a filter surface, or a discharge surface. In addition, the boss 5433 may protrude from the supporting plate 5431 toward the fan 5450 in the axial direction. In this embodiment, it is exemplified that the boss 5433 is defined at the radial central portion of the supporting plate 5431.

The stator 5421 may be disposed on the first supporter 5430. The stator 5421 may surround the boss 5433 at the radial outer side thereof and may be coupled to the boss 5433. That is, the stator 5421 and the boss 5433 may be coupled to each other by inserting the boss 5433 into the stator 5421 in the axial direction. The supporting plate 5431 may support the boss 5433 coupled to the stator 5421 from one side in the lateral direction.

In addition, one side in the axial direction of the stator 5421 coupled to the boss 5433 may face the supporting plate 5431. As one side of the stator 5421 in the axial direction contacts the supporting plate 5431, the stator 5421 and the supporting plate 5431 may be coupled. The stator 5421 may be disposed on the first supporter 5430 in a state spaced apart from the supporting plate 5431.

In addition, the boss 5433 may define a hollow. The shaft 5410 may be inserted into the boss 5433 through the hollow. The shaft 5410 may pass through the boss 5433 in the axial direction, protrude from the boss 5433, and may be connected to a hub 5451 of the fan 5450 described below from the outside of the boss 5433.

A bearing 5435 may be inserted into the boss 5433 defining the hollow. The shaft 5410 may be coupled to the bearing 5435 inside of the boss 5433. In this case, the shaft 5410 may be rotatably supported by the bearing 5435. In this embodiment, it is exemplified that a pair of bearings 5435 are spaced apart from each other by a predetermined distance in the axial direction. The shaft 5410 may be rotatably disposed inside of the boss 5433 in a more stable state by the bearing 5435.

The second supporter 5440 may support the first supporter 5430 and may couple the first fan portion 540 to at least one of the fan cover 530 or the filter portion 550.

The second supporter 5440 may be disposed outside of the first supporter 5430 in the radial direction. The second supporter 5440 may surround the first supporter 5430 from the radial outer side and support the first supporter 5430.

The second supporter 5440 may have a substantially quadrangular shape. For example, a length of the second supporter 5440 in a second direction may correspond to a length of the filter portion 550 in the second direction. In addition, the length of the second supporter 5440 in a third direction may correspond to a half of the length of the filter portion 550 in the third direction. That is, if the pair of second supporters 5440 are arranged in the third direction, an external shape of the pair of second supporters 5440 and an external shape of the filter portion 550 may be substantially the same when viewed from the front.

In addition, the second supporter 5440 may define a hollow. The hollow of the second supporter 5440 may penetrate the second supporter 5440 in the axial direction. A radius of the hollow may be set to be larger than that of the supporting plate 5431. That is, the second supporter 5440 may define the hollow having a size larger than that of the supporting plate 5431 and the supporting plate 5431 may be disposed inside of the second supporter 5440.

In this case, the second supporter 5440 may be spaced apart from the first supporter 5430, for example, the supporting plate 5431 by a predetermined distance in a centrifugal direction.

A fan discharge outlet 5430a may be defined between the supporting plate 5431 and the second supporter 5440 that are spaced apart from each other. The fan discharge outlet 5430a may provide a passage to pass the air introduced into the first fan portion 540 through the first fan portion 540 and discharge the air from the first fan portion 540.

In addition, the fan cases 5430 and 5440 may further include a third supporter 5445. The third supporter 5445 may extend from the supporting plate 5431 in the centrifugal direction and may be connected to the second supporter 5440. The third supporter 5445 may connect between the supporting plate 5431 and the second supporter 5440 and support the supporting plate 5431 on the second supporter 5440.

According to the present embodiment, a plurality of third supporters 5445 may be disposed between the supporting plate 5431 and the second supporter 5440. In addition, each of the third supporters 5445 may have a width smaller than a radial length thereof. The third supporters 5445 may be spaced apart from one another by a predetermined distance along a circumferential direction of the supporting plate 5431.

The fan discharge outlet 5430a may be defined between the supporting plate 5431 and the second supporter 5440 and may be disposed between the plurality of third supporters 5445.

The third supporter 5445 may provide a passage to pass through an electric wire connected to the stator 5421 disposed on the supporting plate 5431. The electric wire connected to the stator 5421 may be taken out toward the second supporter 5440 through an area of the third supporter 5445. In this case, the electric wire may connect between the stator 5421 and a main circuit board 595 (refer to FIG. 3) through the fan discharge outlet 5430a in a state in which the electric wire is blocked by the third supporter 5445. That is, when viewed from the front, the electric wire taken out from the stator 5421 and passing through the area of the fan discharge outlet 5430a is blocked by the third supporter 5445 and is invisible.

In addition, the second supporter 5440 may include a side rib 5443. The side rib 5443 may be disposed on at least one of both sides of the second supporter 5440 in the second direction. The side rib 5443 may protrude from a side surface of the second supporter 5440 in the second direction.

A length of the side rib 5443 in the second direction may correspond to that of the second supporter 5440 in the second direction. In addition, the length of the side rib 5443 in the first direction may be shorter than that of the first supporter 5430 in the first direction. That is, the side rib 5443 may have a thickness smaller than that of the first supporter 5430. For example, the side rib 5443 may have the thickness equal to or less than 1/4 of the thickness of the first supporter 5430.

The side rib 5443 may protrude from the second supporter 5440 and may be biased to a front side or a rear side of the second supporter 5440. In this embodiment, it is exemplified that the side rib 5443 is biased to the rear side of the second supporter 5440.

When the fan portions 540 and 545 are inserted into the case 520, the side rib 5443 may contact both side surfaces of the case 520, that is, inner surfaces of the first surface 521. In this case, a predetermined space may be defined between the side surface of the second supporter 5440 and the first surface 521.

The space may be used as a space for passing the electric wire. For example, the electric wire connected to a sub circuit board 590 disposed on the fan portions 540 and 545 may be connected to a stator 5421 of a motor 5420 through the space.

Referring to FIGS. 8 and 11 to 13, the fan 5450 may include a hub 5451 and a fan blade 5455.

The hub 5451 is disposed at a central portion of the fan 5450 in a radial direction and may rotate together with a rotor 5423 and a shaft. The hub 5451 may include first fan portions 540 and 545 and a skirt 5453.

The first fan portions 540 and 545 may have a disk shape and may be disposed in parallel to a supporting plate 5431. A boss 5433 may be defined between the first fan portions 540 and 545 and the supporting plate 5431.

The first fan portions 540 and 545 may include a shaft coupler 5452a. The shaft coupler 5542a may be disposed at a center of the first fan portions 540 and 545 in the radial direction. The shaft coupler 5452a may protrude from the first fan portions 540 and 545 toward the boss 5433 in the axial direction.

The shaft coupler 5452a may be coupled to an axial end of a shaft 5410. For example, the shaft coupler 5452a and the shaft 5410 may be coupled to each other by inserting the shaft 5410 to the shaft coupler 5452a. The shaft 5410 may be coupled to the shaft coupler 5452a or may be rotatably coupled to the shaft coupler 5452a.

The skirt 5453 may protrude from an edge of the hub plate 5452 toward the supporting plate 5431. The skirt 5453 may form an inclined surface that is inclined in a centrifugal direction toward far away from the hub plate 5452 in the axial direction. For example, a shape in which the hub plate 5452 and the skirt 5453 are connected may be a truncated cone shape defining a hollow and an opening at one side thereof. The skirt 5453 may be disposed at an outside of the stator 5421 in the radial direction. That is, the stator 5421 may be disposed in a space surrounded by the skirt 5453 and the hub plate 5452.

The fan blade 5455 may protrude from the hub 5451 in the centrifugal direction. The fan 5450 includes a plurality of fan blades 5455, and the plurality of fan blades 5455 may be spaced apart from one another by a predetermined distance along a circumferential direction of the hub 5451.

Specifically, the fan blade 5455 may protrude from the skirt 5453 in the centrifugal direction. An inner side of the fan blade 5455 in the radial direction may be connected to the skirt 5453 and an outer side of the fan blade 5455 in the radial direction may be connected to a shroud 5457 described below. That is, the skirt 5453 is directly connected to the fan blade 5455 and directly contacts air passing through the first fan portion 540. The skirt 5453 may also be closely related to a flow path of air passing through the first fan portion 540.

In addition, the fan 5450 may further include the shroud 5457. The shroud 5457 may be disposed outside of the hub 5451 in the radial direction and may be spaced apart from the hub 5451 by a predetermined distance in the radial direction. The shroud 5457 may be spaced apart from the hub 5451 by a distance corresponding to a radial length of the fan blade 5455. In addition, each of the fan blades 5455 may connect the hub 5451, for example, the skirt 5453 and the shroud 5457.

The shroud 5457 may form an inclined surface that is inclined in a centripetal direction toward away from the fan cases 5430 and 5440 in the axial direction, that is, toward the rear. For example, the shroud 5457 may form an inclined surface substantially in parallel to the skirt 5453. In the present embodiment, it is exemplified that a distance between the skirt 5453 and the shroud 5457 is increased toward the front.

Each fan blade 5455 connecting the shroud 5457 and the skirt 5453 may include a leading edge 5455a, a trailing edge 5455b, a shroud cord 5455c, and a hub cord 5455d.

The leading edge 5455a may be disposed at a front end in a rotational direction and have a straight shape. The rotational direction is referred to as a rotational direction of the fan 5450. The leading edge 5455a may be disposed at the front end of the fan 5450 along the rotational direction of the fan 5450 and may have the straight shape and extends in the radial direction.

The trailing edge 5455b may be disposed at a rear end in the rotational direction and may have a straight shape. The trailing edge 5455b may have the straight shape and extend in a direction between the axial direction and the radial direction.

The shroud cord 5455c may connect a first end of the leading edge 5455a and a first end of the trailing edge 5455b. The shroud cord 5455c may extend from an inner circumferential surface of the shroud 5457.

The hub cord 5455d may connect a second end of the leading edge 5455a and a second end of the trailing edge 5455b. The hub cord 5455d may extend from an outer circumferential surface of the hub 5451.

In addition, the first end of the leading edge 5455a and the first end of the trailing edge 5455b may be connected to an inner circumferential surface of the shroud 5457. In addition, the second end of the leading edge 5455a and the second end of the trailing edge 5455b may be connected to an outer circumferential surface of the skirt 5453.

The first end of the leading edge 5455a may be disposed closer to a radial center of the hub plate 5452 than the first end of the trailing edge 5455b. In addition, the second end of the leading edge 5455a may be disposed closer to the radial center of the hub plate 5452 than the second end of the trailing edge 5455b. The first end and the second end of the leading edge 5455a are disposed in front of the first end and the second end of the trailing edge 5455b in the rotational direction, and a radius of the skirt 5453 is narrower toward the front in the rotational direction.

The hub 5451 may include an inner protrusion 5454. The inner protrusion 5454 may protrude from the hub plate 5452 toward the supporting plate 5431. In this embodiment, it is exemplified that the inner protrusion 5454 and the skirt 5453 protrude from a same point of the hub plate 5452, for example, from the edge of the hub plate 5452.

The inner protrusion 5454 may extend from the hub plate 5452 in the axial direction. For example, a shape in which the hub plate 5452 and the skirt 5453 are connected may be a cylindrical shape defining a hollow and an opening at one side thereof.

The inner protrusion 5454 may be disposed between the skirt 5453 and the stator 5421. That is, the stator 5421 may be disposed in a space surrounded by the inner protrusion 5454 and the hub plate 5452.

The rotor 5423 may be disposed between the inner protrusion 5454 and the stator 5421. The rotor 5423 may be coupled to an inner circumferential surface of the inner protrusion 5454. That is, the stator 5421 may be coupled to fan cases 5430 and 5440 and the rotor 5423 may be coupled to the fan 5450. The fan 5450 may rotate together with the rotor 5423 when the rotor 5423 rotates.

According to the present embodiment, a fan blade 5455 is connected to the skirt 5453 of the hub 5451. The skirt 5453 forms an inclined surface inclined in a direction between the axial direction and the radial direction to guide flow of air introduced into the fan portions 540 and 545 in the direction between the axial direction and the radial direction.

As the skirt 5453 has the inclined shape, it is difficult to couple the rotor 5423 to the inner circumferential surface of the skirt 5453. For example, in order for the rotor 5423 to be coupled to the inner circumferential surface of the skirt 5453, the rotor 5423 may have the truncated cone shape defining a hollow to correspond the shape of the outer circumferential surface of the rotor 5423 to the shape of the inner circumferential surface of the skirt 5453. However, the shape of the rotor 5423 may not be suitable for stable driving of the motor 5420.

In consideration of this point, in the present embodiment, the inner protrusion 5454 is defined between the skirt 5453 and the stator 5421. The inner protrusion 5454 may provide a fixing surface to stably couple the rotor 5423 inside of the hub 5451 when the rotor 5423 has a cylindrical shape defining the hollow.

In addition, the inner protrusion 5454 may form a structure to increase rigidity of the hub 5451 inside of the hub 5451. The inner protrusion 5454 may contribute to effectively increasing the rigidity of the fan 5450 while suppressing a significant increase in overall weight of the fan 5450.

### [Coupling structure between fan portion and fan cover]

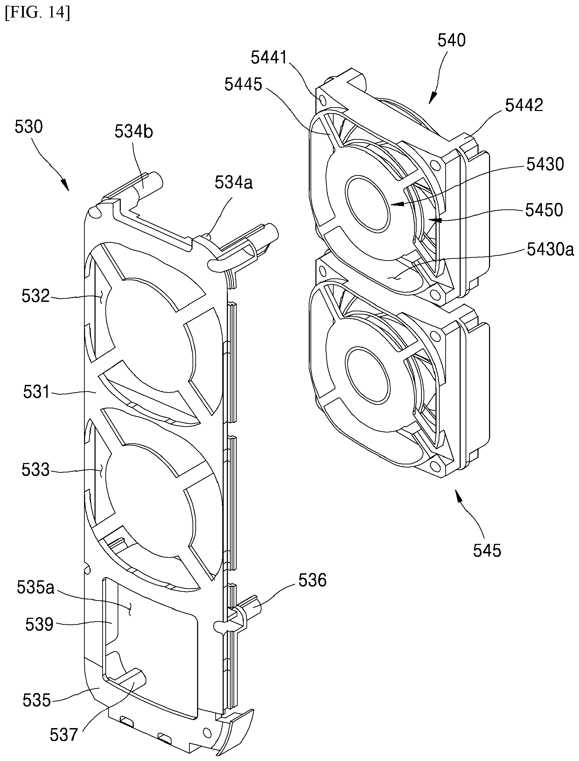

FIG. 14 is an exploded perspective view showing a fan case and fan portions.

Referring to FIG. 14, a fan cover 530 may include a first cover 531 and a second cover 535.

The first cover 531 is disposed at a front side of fan portions 540 and 545. The first cover 531 may include air discharging portions 532 and 533. The air discharging portions 532 and 533 may penetrate or cut a portion of the first cover 531. The air discharging portions 532 and 533 may provide a passage on the fan cover 530 to connect between a front side of a case 520, that is, a discharging surface and a fan 5450 of the fan portions 540 and 545.

In this embodiment, it is exemplified that a portable air purifier 50 includes two fan portions 540 and 545. That is, the first fan portion 540 and the second fan portion 545 are arranged vertically in an accommodating space inside of the case 520.

Accordingly, the fan cover 530 may include two units of air discharging portions 532 and 533. That is, the upper air discharging portion 532 and the lower air discharging portion 533 may be arranged vertically in the first cover 531.

Air that has passed through the first fan portion 540 is discharged forward through the upper air discharging portion 532 and the air that has passed through the second fan portion 545 may be discharged forward through the lower air discharging portion 533.

As another example, the portable air purifier may include one or three or more fan portions and the fan cover may include one or three or more air discharging portions.

In addition, the first cover 531 may include a first fastening protrusion 534a. The first fastening protrusion 534a may protrude rearward from a rear surface of the first cover 531. Correspondingly, the fan cases 5430 and 5440 may include a fastening hole 5441. The fastening hole 5441 may penetrate the second supporter 5440 in a forward and rearward direction.

For example, a total of four fastening holes 5441 may be defined one by one at each corner of the second supporter 5440. In addition, the first fastening protrusions 534a may also be provided at positions corresponding thereto.

Each of the first fastening protrusions 534a may be inserted into the fastening hole 5441 and coupled to the second supporter 5440 by fitting. The fan cover 530 and the fan portions 540 and 545 may be coupled at a plurality of points by the coupling between the first fastening protrusion 534a and the second supporter 5440.

When the fan cover 530 and the fan portions 540 and 545 are coupled, the fan portions 540 and 545 may be coupled to a rear side of the fan cover 530. In this case, the fan portions 540 and 545 may be fixed at a position in which a fan discharge outlets 5430a defined at a front side of the fan portions 540 and 545 and the air discharging portions 532 and 533 of the fan cover 530 overlap in a first direction. Therefore, a linear passage may be provided to pass the air discharged from the fan portions 540 and 545 through the fan cover 530.

### [Structure of coupling among filter case, fan base, and fan cover]

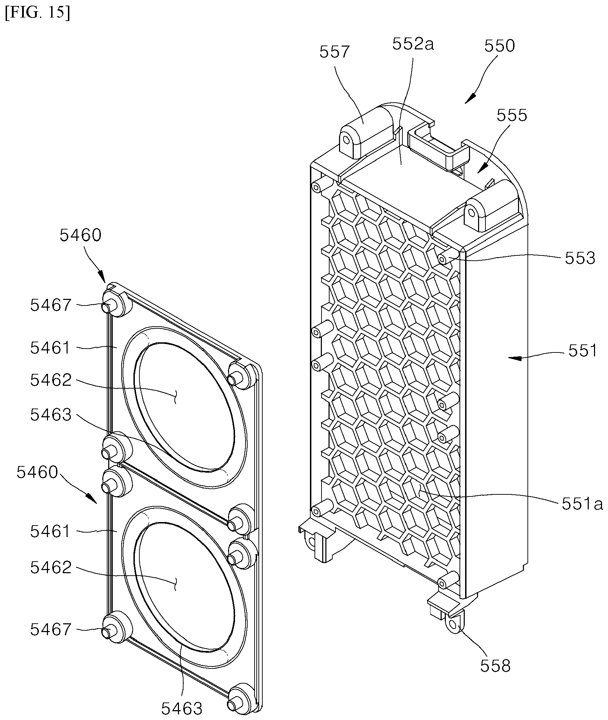

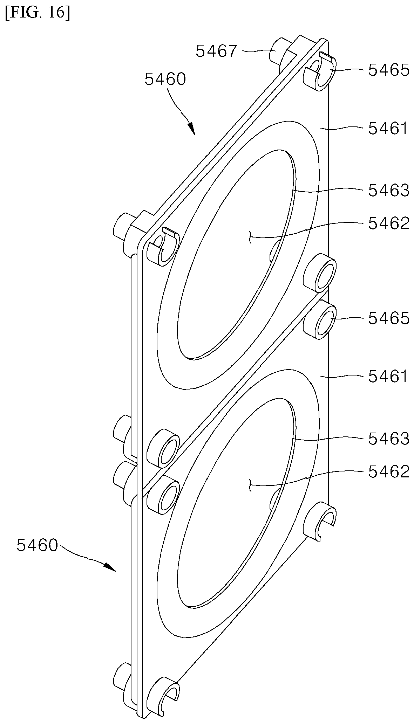

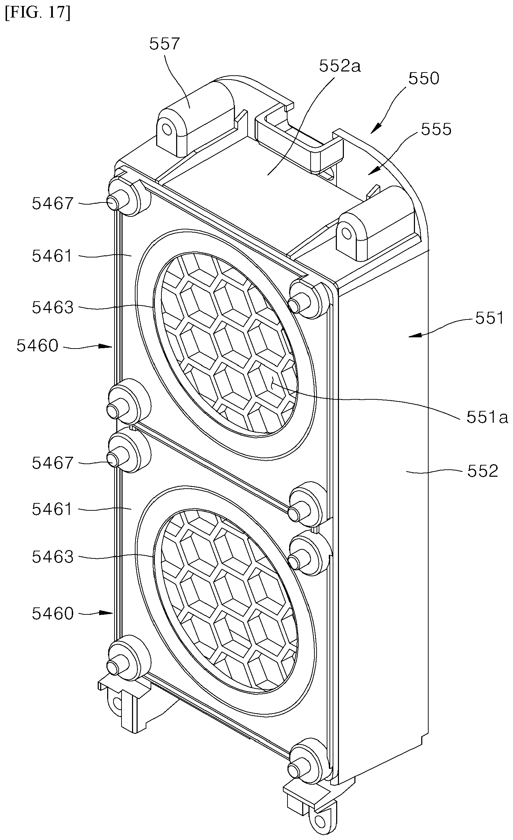

FIG. 15 is an exploded perspective view showing a fan portion, a fan base, and a filter case. FIG. 16 is a rear perspective view showing a rear surface of a fan base. FIG. 17 shows a state of coupling between a fan base and a filter case.

Referring to FIGS. 8 and 14 to 17, a portable air purifier 50 of the present disclosure may further include a fan base 5460.

The fan base 5460 may be disposed between a filter portion 550 and fan portions 540 and 545. The fan base 5460 may have a shape corresponding to that of a filter surface. For example, the fan base 5460 may have the shape of the filter 559 viewed from the front, for example, a rectangular shape. The fan base 5460 may include a base plate 5461 and a bell mouth 5463.

In this embodiment, it is exemplified that two fan bases 5460 disposed in a third direction, that is, in a vertical direction, are arranged between the filter portion 550 and the fan portions 540 and 545. In this structure, one upper fan base 5460 may be disposed between the first fan portion 540 and the filter portion 550 and the other lower fan base 5460 may be disposed between the second fan portion 545 and the filter portion 550.

If the fan base 5460 is provided in a separated form according to the number of fan portions, the fan base 5460 easily responds to changes in the number of fan portions. That is, when a fan portion is provided, a fan base 5460 may be used, and when two or more fan portions are provided, the fan bases 5460 having the number corresponding to the number of fan portions may be stacked in the vertical direction. Therefore, it is not necessary to prepare various types of fan bases 5460 according to the number of fan portions, thereby facilitating components management.

The fan base 5460 includes a plurality of fan suction inlets 5462.

A base plate 5461 may be disposed between the filter portion 550 and the fan portions 540 and 545. A length of the base plate 5461 in a first direction is shorter than that of each of the filter portion 550 and the fan portions 540 and 545 in the first direction. For example, the base plate 5461 may have a rectangular shape.

The fan suction inlet 5462 may be defined in the base plate 5461. The fan suction inlet 5462 may penetrate the base plate 5461 in the first direction. The fan suction inlet 5462 may substantially overlap with the air discharging portions 532 and 533 of the fan cover 530 (see FIG. 14) and the fan discharging outlets 5430a of the fan portions 540 and 545 in the first direction. The fan suction inlet 5462 may provide a passage to connect the filter 559 and the fan portions 540 and 545 on the fan base 5460.

A bell mouth 5463 may protrude from the base plate 5461. The bell mouth 5463 may protrude from the base plate 5461 in the axial direction toward the fan portions 540 and 545.

In this embodiment, it is exemplified that the fan suction inlet 5462 has a shape of a shroud 5457, that is, a circular shape. In addition, a radius of the fan suction inlet 5462 may be similar to that of a portion of the shroud 5457 adjacent to the fan suction inlet 5462.

The bell mouth 5463 may surround an outer circumferential surface of the fan suction inlet 5462. In other words, the fan suction inlet 5462 penetrates an inner side of the bell mouth 5463 in a radial direction.

The bell mouth 5463 may protrude from the fan suction inlet 5462 toward the fan portions 540 and 545 in the first direction. In this case, at least a portion of the bell mouth 5463 may be inserted into the shroud 5457 in the radial direction. The bell mouth 5463 guides suction flow at inlets of the fan portions 540 and 545, thereby contributing to improving a suction and discharge performance of the fan portions 540 and 545.

The fan base 5460 may be coupled to the filter portion 550. A fastening boss 5433 may be defined at one of the fan base 5460 and the filter portion 550 and a second fastening protrusion 553 may be defined at one of the fan base 5460 and the filter portion 550. In this embodiment, it is exemplified that the fastening boss 5433 is defined on the fan base 5460 and the second fastening protrusion 553 is defined on the filter portion 550.

The fastening boss 5433 may protrude from the base plate 5461 toward the filter portion 550 in the first direction. The fastening boss 5433 may define a hollow. In addition, the second fastening protrusion 553 may protrude from the filter portion 550, for example, the front surface of the filter case 551 in the first direction toward the fan base 5460. The second fastening protrusion 553 may be coupled to the fastening boss 5433 by fitting by inserting the second fastening protrusion 553 into the hollow of the fastening boss 5433.

For example, a total of four fastening bosses 5433 may be defined one by one at each corner of the first supporter 5430. In addition, the second fastening protrusions 553 may also be provided at positions corresponding thereto.

The fan base 5460 and the filter portion 550 may be coupled at a plurality of points by the coupling between the second fastening protrusion 553 and the fastening boss 5433. When the fan base 5460 and the filter portion 550 are coupled, the fan base 5460 may be coupled to a front side of the filter portion 550.

In addition, the fan base 5460 may be coupled to the fan portions 540 and 545. For the coupling, a third fastening protrusion 5467 may be defined at one of the fan base 5460 and the fan portions 540 and 545 and a protruding boss 5442 may be defined at the other one of the fan base 5460 and the fan portions 540 and 545. In this embodiment, it is exemplified that the fan base 5460 defines the third fastening protrusion 5467 and the fan portions 540 and 545 define the protruding boss 5442.

The protruding boss 5442 may protrude from the second supporter 5440 toward the fan base 5460 in the first direction. The protruding boss 5442 may define a hollow. In addition, the third fastening protrusion 5467 may protrude forward from a front surface of the base plate 5461. The third fastening protrusion 5467 may be coupled to the fastening boss 5433 by fitting by inserting the third fastening protrusion 5467 into the hollow of the protruding boss 5442.

When the protruding boss 5442 and the third fastening protrusion 5467 are coupled, the fan base 5460 and the fan portions 540 and 545 may be coupled to each other to space the second supporter 5440 apart from the base plate 5461 by a predetermined distance. In this case, the set distance is set to be larger than or equal to an axial length of the portion of the fan 5450 that protrudes outward in the radial direction of the second supporter 5440, for example, a length of the shroud 5457 in the first direction.

In addition, a total of four protruding bosses 5442 may be defined one by one at each corner of the second supporter 5440. In addition, the third fastening protrusions 5467 may also be provided at positions corresponding thereto.

The coupling portion between each of the protruding bosses 5442 and the third fastening protrusion 5467 may be opened in the radial direction. In addition, a portion of the fan 5450, for example, a portion of the shroud 5457 may protrude outward from the second supporter 5440 in the radial direction through the opening.

The fan base 5460 may perform a function as a coupling medium for coupling between the fan portions 540 and 545 and the filter portion 550 and also perform a function for improving the suction and discharge performance of the fan portions 540 and 545 by guiding the suction flow at the inlet of the fan portions 540 and 545.

The filter case 551 may include a case body 552.

The case body 552 may form an external skeleton of the filter case 551 and may have a hexahedral shape with an open rear surface. The case body 552 includes an insertion space to accommodate a filter 559. In addition, the case body 552 has an opening at a rear side thereof to provide a passage to insert the filter 559 into the insertion space of the case body 552.

The filter case 551, for example, an upper surface 552a of the case body 552 may form a plane that extends in a first direction and a second direction, that is, a horizontal plane that extends in a forward and rearward direction and a horizontal direction.

In addition, the filter case 551 may further include a protruding supporter 555. The protruding supporter 555 may protrude from the case body 552 to form a coupling surface with a supporting member 600. The protruding supporter 555 may include a plane that extends from the case body 552 in a third direction and protrudes from the upper surface 552a toward one side in the third direction, that is, in an upward direction. In this case, the protruding supporter 555 may include a vertical plane that extends in the vertical direction and the horizontal direction.

An upper cover 531 of the fan cover 530 may further include a fourth fastening protrusion 534b. The fourth fastening protrusion 534b protrudes rearward from a rear surface of the upper cover 531. The fourth fastening protrusion 534b may be coupled to the filter portion 550 by fitting. As the fourth fastening protrusion 534b needs to be coupled to the filter portion 550 disposed at the rear side of the fan portions 540 and 545, the fourth fastening protrusion 534b may protrude to a longer length than that of the first fastening protrusion 534a.

The filter case 551 may include a first fan cover coupler 557. The first fan cover coupler 557 may be disposed on the upper cover 531. The first fan cover coupler 557 may be coupled to the fourth fastening protrusion 534b of the fan cover 530 on the case body 552.

The fourth fastening protrusion 534b may be coupled to the first fan cover coupler 557 by fitting. The first fan cover coupler 557 and the fourth fastening protrusions 534b are fastened using a predetermined fastening member in a state in which the first fan cover coupler 557 and the fourth fastening protrusion 534b are coupled by fitting, the fan cover 530 and the filter portion 550 may be fastened.

When the first fan cover coupler 557 and the fourth fastening protrusion 534b are fastened by the fastening member, the fan cover 530 and the filter case 551 receive a force in a direction toward each other. That is, the fan cover 530 receives a force to move the fan cover 530 rearward and the filter case 551 receives a force to move the filter case 551 forward.

In this case, the fan cover 530 and the filter case 551 press the fan assemblies 540 and 545 (see FIG. 4) disposed between the fan cover 530 and the filter portion 550 from the front and the rear. Therefore, the fan portions 540 and 545 may be firmly coupled between the fan cover 530 and the filter portion 550 without an additional fastening operation.

That is, the fan cover 530, the fan portions 540 and 545, and the filter case 551 may be fastened together by the fastening member used for fastening the fan cover 530 and the filter case 551. Therefore, the fan cover 530, the fan portions 540 and 545, and the filter portion 550 may be assembled easier and faster.

In addition, the filter case 551 may further include a second fan cover coupler 558. The second fan cover coupler 558 may be disposed on the lower cover 535. The second fan cover coupler 558 may be coupled to a fifth fastening protrusion 536 of the fan cover 530 under the case body 552.

A coupling protrusion 560a on the battery 560 may be disposed between the second fan cover coupler 558 and the fifth fastening protrusion 536. The second fan cover coupler 558 and the fifth fastening protrusion 536 may be coupled to each other and the coupling protrusion 560a (see FIG. 2) of the battery 560 may be defined between the second fan cover coupler 558 and the fifth fastening protrusion 536. Therefore, the fan cover 530, the filter portion 550, and the battery 560 may be coupled together by a fastening operation using a fastening member.

### [Air flow pattern of portable air purifier]

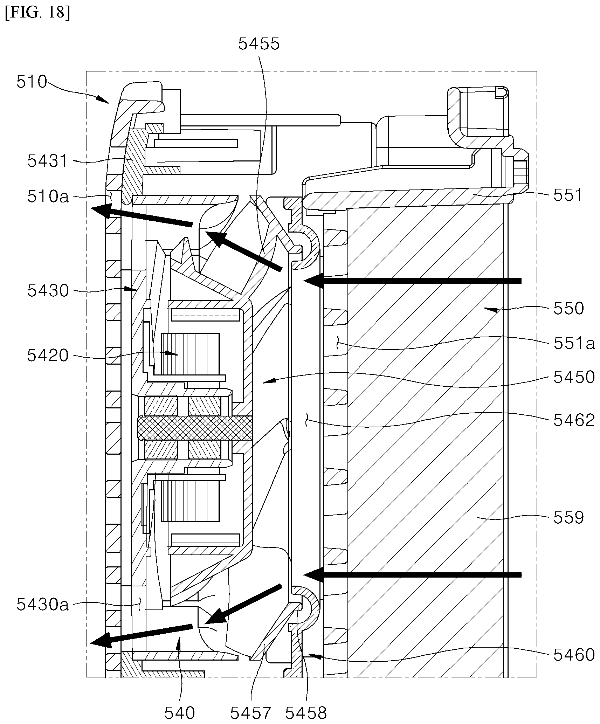

FIG. 18 shows an example air flow pattern of a portable air purifier.

In FIG. 18, some components of the portable air purifier are omitted.

Hereinafter, the air flow pattern of the portable air purifier according to the present embodiment is described with reference to FIGS. 5 and 18.

Referring to FIGS. 5 and 18, air behind a portable air purifier 50 is introduced into the portable air purifier 50 by operations of fan portions 540 and 545. In this case, the air behind the portable air purifier 50 may pass a suction surface through a first suction inlet 570a defined in a rear panel 570.

The air introduced into the portable air purifier 50 through the suction surface may pass through a filter 559. In this process, physical particles such as dust/fine dust/ultrafine dust contained in the air, chemical substances such as odor particles/harmful gases, and microorganisms such as bacteria/viruses may be filtered.

In this case, the air may be suctioned into the filter 559 through the suction surface having an area corresponding to that of the filter surface. In addition, the air suctioned through the suction surface may be filtered through the filter surface having an area corresponding to that of the fan portions 540 and 545.

That is, the air may be effectively suctioned and filtered through the suction surface and the filter surface having a sufficient size corresponding to the area of the fan portions 540 and 545. In addition, as the suction surface, the filter surface, and the fan portions 540 and 545 are arranged in a straight line, the air may be effectively suctioned and filtered while minimizing flow loss.

The air that has passed through the filter 559, that is, purified air, may be introduced into the fan portions 540 and 545 through a fan suction inlet 5462. The flow of air passing through the fan suction inlet 5462 may be guided by a bell mouth 5463, thereby effectively inducing smooth air flow into the fan portions 540 and 545.

The air introduced into the fan portions 540 and 545 may be discharged to the front of the fan portions 540 and 545 through a fan discharge outlet 5430a and may be discharged in a mixed flow direction. In this case, the mixed flow direction may be referred to as a forward diagonal direction.

The air discharged to the front of the fan portions 540 and 545, that is, the purified air, may pass through the fan cover 530 and be discharged to a space in front of the portable air purifier 50. In this case, the purified air may pass a discharge surface through a discharge outlet 510a of a front cover 510.

In this case, the purified air may be discharged through a discharge surface having an area corresponding to that of each of the suction surface, the filter surface, and the fan portions 540 and 545. That is, the purified air may be effectively discharged through the discharge surface having a sufficient size corresponding to the area of each of the suction surface, the filter surface, and the fan portions 540 and 545. In addition, as the suction surface, the filter surface, the fan portions 540 and 545, and the discharge surface are arranged in the straight line, the air may be effectively suctioned, filtered, and the purified air may be discharged while minimizing flow loss.

### [Effect of portable air purifier including a mixed flow fan]

A portable air purifier 50 of the present embodiment includes a mixed flow fan 5450. The portable air purifier 50 may provide the following effects.

First, fan portions 540 and 545 include the mixed flow fan 5450. In this case, an improved air purification performance may be achieved compared to the fan portions including an axial fan.

The axial fan allows air to be suctioned and discharged on a straight line. The axial fan may have a small thickness, so the axial fan is advantageous to be used for a miniaturized air purifier.

However, the axial fan has a significantly degraded performance under a fixed pressure condition. For example, when density or the thickness of the filter 559 is increased to improve filtering performance, the suction and discharge performance of the axial fan may be significantly deteriorated. For this reason, the axial fan has difficulty in being used for the portable air purifier including a high-performance filter.

The mixed flow fan has an intermediate property between the axial fan and a centrifugal fan and has superior performance under the fixed pressure condition compared to the axial fan of the same size. However, an axial length of the mixed flow fan may be longer than that of the axial fan of the same size.

However, the axial fan is disadvantageous in emitting high-pressure, high-speed air due to the properties thereof, and therefore, a structure such as a guide vane may be added to the portable air purifier including the axial fan. For example, guide vanes may be disposed in air discharging portions 532 and 533 of a fan cover 530, which is a factor for increasing a length, that is, a thickness of the fan cover 530 in a first direction.

When the thickness of the fan cover 530 is increased due to the guide vane, the length of the axial fan in the first direction may be reduced due to a limited space inside of the portable air purifier, which again degrades the suction and discharge performance of the axial fan.

The mixed flow fan is more advantageous in emitting the high-pressure and high-speed air compared to the axial fan. That is, the mixed flow fan may send the air much farther than the axial fan, even without the structure such as the guide vane.

In the present embodiment, a structure such as a guide vane is omitted from the fan cover 530. Therefore, the thickness of the fan cover 530 is reduced and the fan portions 540 and 545 may have a size such that the fan portions 540 and 545 are inserted into the air discharging portions 532 and 533. For example, a length of the fan portions 540 and 545 in a first direction may be set to a length such that front surfaces of the fan portions 540 and 545 are flush with a front surface of the fan cover 530. That is, the length of the fan portions 540 and 545 in the first direction may be increased by the length of the guide vane.

As the size of the fan portions 540 and 545 is increased, a suction and discharge performance of the fan portions 540 and 545 is improved, and thus, the portable air purifier 50 of the present embodiment may achieve the improved air purification performance.

In addition, with respect to the structure of the fan portions 540 and 545, fan cases 5430 and 5440 do not surround the fan 5450 from outside in a radial direction. That is, the fan 5450 protrudes further than an inner circumferential surface of the second supporter 5440 in a centrifugal direction. At least a portion of the fan 5450 may protrude through a gap between a second supporter 5440 and a base plate 5461.

The fan 5450 may protrude further than the inner circumferential surface of the second supporter 5440 in the centrifugal direction, thereby increasing the size of the fan 5450.

As the size of the fan portions 540 and 545 is increased, the suction and discharge performance of the fan portions 540 and 545 is improved, and thus, the portable air purifier 50 of the present embodiment may achieve the improved air purification performance.

Second, as the fan portions 540 and 545 include the mixed flow fan 5450, a degree of air discharge of the portable air purifier 50 may be further increased.

The mixed flow fan may discharge the air in a mixed flow direction and the purified air discharged through a discharge surface may flow in the mixed flow direction, that is, in a direction between a forward direction and the centrifugal direction.

Due to a small size of the portable air purifier 50, if the purified air is discharged only in a straight forward direction, the discharge range of the purified air may be limited to a range corresponding to the discharge surface.

Even considering the small size of the portable air purifier 50, if the discharge range of the purified air is limited to the range corresponding to the discharge surface, the portable air purifier 50 may have a lot of restrictions on the use thereof.

A user may suffer from use inconvenience, for example, the user may continuously hold the portable air purifier 50 or accurately adjust a position of the portable air purifier 50 to direct a discharging outlet 510a toward the face.

The portable air purifier 50 of the present embodiment may discharge high-pressure, high-speed air in a direction between the forward direction and the centrifugal direction. In this case, the purified air may reach a long distance and flow to a wider range. Therefore, the portable air purifier 50 may achieve the improved air purification performance.

Third, each of the fan portions 540 and 545 includes a mixed flow fan 5450 and a plurality of fan portions 540 and 545 are stacked. Therefore, the purified air may be discharged farther.

The mixed flow fan may discharge the air in the mixed flow direction. In this case, a collision between the air discharged from the first fan portion 540 and the air discharged from the second fan portion 545 may occur at portions of the fan portions 540 and 545 adjacent to each other.

For example, the air may be discharged from a lower side of the first fan portion 540 adjacent to the second fan portion 545 in a downwardly inclined direction and the air may be discharged from an upper side of the second fan portion 545 adjacent to the first fan portion 540 in an upwardly inclined direction.

In this case, a portion of the air discharged from the first fan portion 540 and a portion of the air discharged from the second fan portion 545 may collide with each other. Therefore, radial velocity vectors thereof may be reduced and forward velocity vectors thereof may be increased.

The decrease in the radial velocity vector and the increase in the forward velocity vector signify that a direction of the velocity vector of the air discharged from the portable air purifier 50 is changed to a direction closer to the forward direction.

Therefore, the portable air purifier 50 may achieve the improved air purification performance by concentrating the air discharge direction on the forward direction and reaching the purified air to a farther position.

### [Structure of acoustic portion]

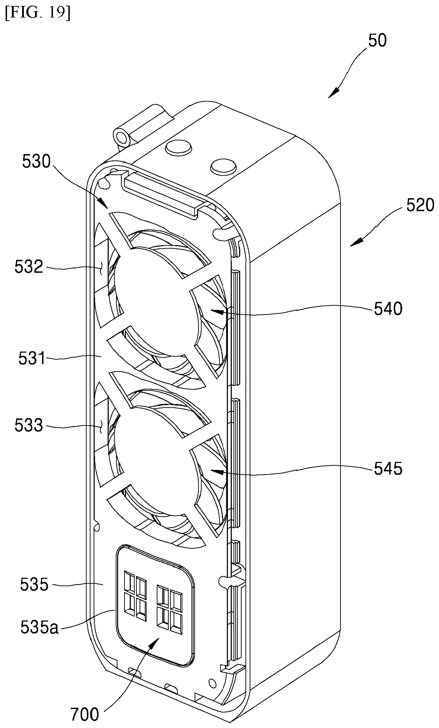

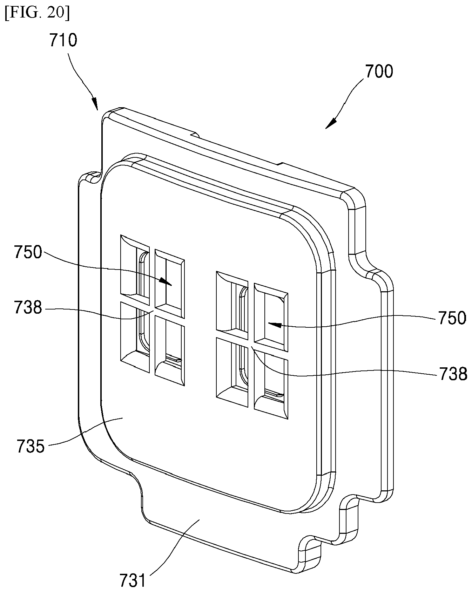

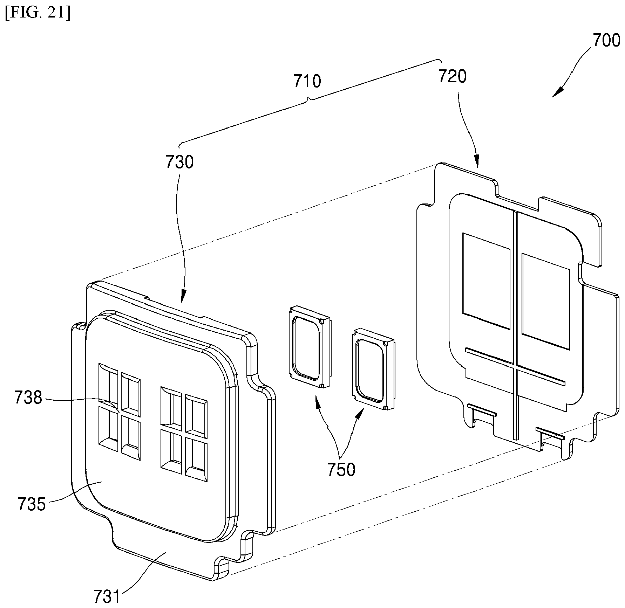

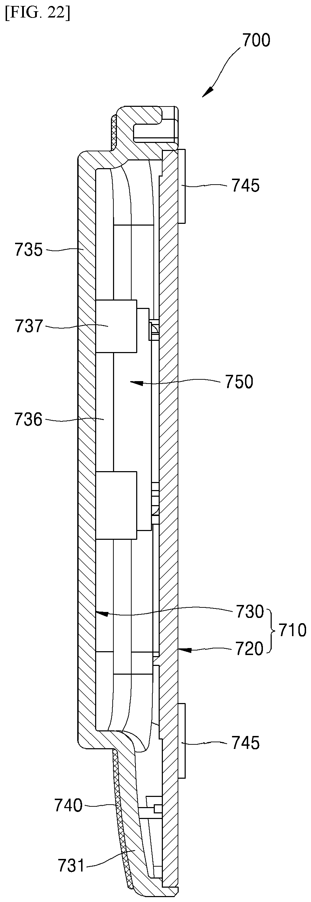

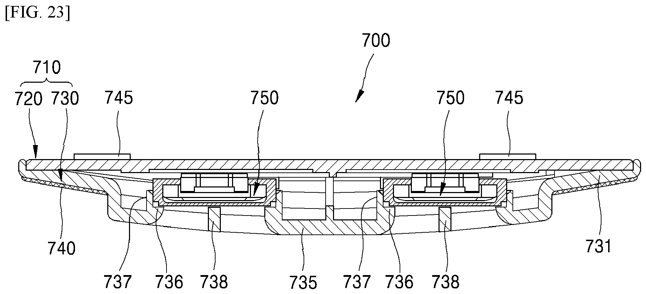

FIG. 19 is a front perspective view showing an example portable air purifier, where a front panel is removed. FIG. 20 is a perspective view showing an acoustic portion of FIG. 19. In addition, FIG. 21 is an exploded perspective view showing the acoustic portion of FIG. 20, FIG. 22 is a plan cross-sectional view of the acoustic portion of FIG. 20, and FIG. 23 is a side cross-sectional view of the acoustic portion of FIG. 20.

Referring to FIGS. 5 and 19, the acoustic portion 700 may be accommodated in an accommodating space inside of a case 520. The acoustic portion 700 is disposed between a suction inlet 570a and a discharge outlet 510a, and fan portions 540 and 545 and the acoustic portion may be arranged in a direction different from a first direction. For example, the acoustic portion 700 may be disposed between a front panel 510 and a battery 560 and may be disposed under the fan portions 540 and 545 and a filter portion 550.

Specifically, the acoustic portion 700 may be disposed between a fan cover 530 and a board. More specifically, the acoustic portion 700 may be disposed between a second cover 535 and a main circuit board 595. The board mentioned below is referred to as the main circuit board 595 disposed between the acoustic portion 700 and the battery 560.

Referring to FIGS. 19 to 23, the acoustic portion 700 may include a speaker case 710 and a speaker 750.

The speaker case 710 may be disposed between the suction inlet 570a and the second cover 535, for example, between the main circuit board 595 and the second cover 535. The speaker case 710 may include a speaker accommodating space to accommodate the speaker 750.

The speaker 750 may be accommodated in the speaker case 710, that is, the speaker accommodating space, and may be disposed in the speaker case 710. Various types of speaker units may be used as the speaker 750. However, it is advantageous that a speaker unit having a size small enough to be accommodated inside of the speaker case 710 of the small-sized portable air purifier 50 is used as the speaker 750. More advantageously, the speaker 750 may include a speaker unit capable of reproducing sound in response to an electric signal through Bluetooth communication.

The speaker case 710 accommodating the speaker 750 may include a rear case 720 and a front case 730.

The rear case 720 may be disposed between the suction inlet 570a and the second cover 535, for example, between the main circuit board 595 and the second cover 535. The rear case 720 may include a plane orthogonal to the first direction, that is, a plane in parallel to a suction surface or a discharge surface.

The front case 730 may be disposed between the rear case 720 and the discharge outlet 510a and may be coupled to the rear case 720. The speaker case 710 may be provided by coupling the rear case 720 and the front case 730 and a speaker accommodating space surrounded by the rear case 720 and the front case 730 coupled to each other may be provided in the speaker case.

The front case 730 may be coupled to the second cover 535 between the rear case 720 and the second cover 535. That is, the front case 730 is coupled to the fan cover 530 when the speaker case 710 and the fan cover 530 are coupled to each other. The front case 730 may include a first case 731 and a second case 735.

The second case 735 may form a plane orthogonal to the first direction and may be disposed at a central portion of the front case 730. In addition, the first case 731 may be disposed outside of the second case 735 on the plane orthogonal to the first direction.

For example, the front case 730 may be provided by disposing the second case 735 in a central area and surrounding the second case 735 from the outside by the first case 731.

The first case 731 may be disposed between the rear case 720 and the second cover 535. In this embodiment, the first case 731 may correspond to an edge of the front case 730. A rear surface of the first case 731 may be coupled to the rear case 720 and a front surface of the first case 731 may be coupled to the rear surface of the second cover 535.

The second case 735 may be inserted into a cover hole 535a of the second cover 535 described below and may be coupled to the second cover 535. The second case 735 may form a plane that protrudes further than the first case 731 toward the discharge outlet 510a, that is, toward the front, and may be connected to the first case 731.

That is, the front case 730 may be provided by defining the edge by the first case 731 and forming a plane that protrudes forward from the first case 731, by the second case 735.

A speaker mounting portion may be accommodated in at least one of the rear case 720 or the front case 730. In this embodiment, it is exemplified that the speaker mounting portion is accommodated in the front case 730.

The speaker mounting portion may restrict the position of the speaker 750 in the speaker accommodating space. The speaker mounting portion may include a protruding rib 736.

The protruding rib 736 may protrude from the front case 730 toward the rear case 720. For example, the protruding rib 736 may protrude rearward from a rear surface of the front case 730. The protruding rib 736 may protrude to a length such that protruding rib 736 is spaced apart from the rear case 720 by a distance corresponding to the length of the speaker 750 in a forward and rearward direction.

At least a portion of the speaker 750 may overlap with the protruding rib 736 in the forward and rearward direction. For example, an outer edge of the speaker 750 may overlap with the protruding rib 736 in the forward and rearward direction. The speaker 750 may be disposed between the protruding rib 736 and the rear case 720 and may be coupled inside of the speaker case 710.

The protruding rib 736 may define a hollow. The hollow may be defined in the protruding rib 736, and the hollow may have a shape of a hole penetrating the protruding rib 736 and the front case 730 in the first direction, that is, in the forward and rearward direction.

At least a portion of the speaker 750 may be exposed toward the discharge outlet through the hollow of the protruding rib 736. That is, the speaker 750 may be exposed through the speaker case 710 via the hollow.

In addition, the speaker mounting portion may further include a restraining protrusion 737. The restraining protrusion 737 may protrude from the protruding rib 736 toward the rear case 720. For example, the restraining protrusion 737 may be thicker than the protruding rib 736 and protrude rearward from an outer surface of the protruding rib 736.

When the speaker 750 is disposed between the protruding rib 736 and the rear case 720, the restraining protrusion 737 may surround surrounding of the speaker 750 disposed between the protruding rib 736 and the rear case 720 at the outside in the second direction and the third direction.

At least a portion of the speaker 750 is inserted into a space surrounded by a rear end of the protruding rib 736 and the restraining protrusion 737 and the position of the speaker 750 may be restricted.

That is, the restraining protrusion 737 may guide the positions of the speaker 750 in the second direction and the third direction and restrain the movement of the speaker 750 in the second direction and the third direction.

The speaker 750 may be disposed between the protruding rib 736 and the rear case 720 in the forward and rearward direction and is surrounded by the restraining protrusion 737 in a circumferential direction thereof. In this state, the speaker 750 may be coupled to the inside of the speaker case 710.

In addition, the speaker mounting portion may further include a front rib 738. The front rib 738 may be disposed in the hollow and may be accommodated in the front case 730 to pass through the hollow in a direction perpendicular to the first direction. For example, the front rib 738 may have a + shape including a rib that passes through the hollow in a horizontal direction and a rib that passes through the hollow in a vertical direction. The front rib 738 may be disposed at a front side of the speaker 750.

At least a portion of the speaker 750 may be disposed between the front rib 738 and the rear case 720. In this embodiment, it is exemplified that a horizontal central portion and a vertical central portion of the speaker 750 are disposed at a rear side of the front rib 738. As the portion of the speaker 750 contacts the front rib 738, the speaker 750 may be disposed between the front rib 738 and the rear case 720.

That is, the speaker 750 is disposed between the protruding rib 736 and the rear case 720 in the forward and rearward direction and between the front rib 738 and the rear case 720, and is surrounded by the restraining protrusion 737 in the circumferential direction thereof. In this state, the speaker 750 may be coupled to the inside of the speaker case 710.

The speaker 750 may be stably coupled inside of the speaker case 710. Sound transmitted from the speaker 750 disposed inside of the speaker case 710 may spread to the front of the acoustic portion 700 through the front of the speaker case 710 opened through the hollow. The sound transmitted to the front of the acoustic portion 700 may pass through the fan cover 530 and the front panel 510 and may effectively spread to the outside of the portable air purifier 50.

In addition, the speaker 750 may be electrically connected to a main circuit board 595 disposed at a rear side of the acoustic portion 700 through an electric wire. The speaker accommodating space inside of the speaker case 710 to accommodate the speaker 750 may provide a space to connect the electric wire to the speaker 750 through the speaker case 710.

In addition, the speaker case 710 including the speaker accommodating space may function as a resonator to resonate the sound output from the speaker 750. Therefore, the acoustic portion 700 has a more improved output than that of the speaker 750 and may provide an improved sound quality.

### [Coupling structure among acoustic portion, board, and fan cover]

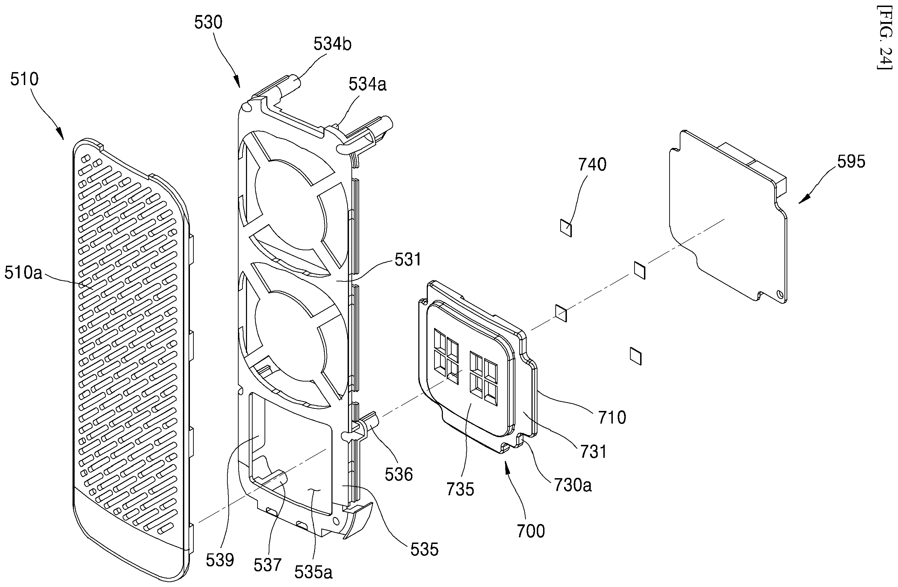

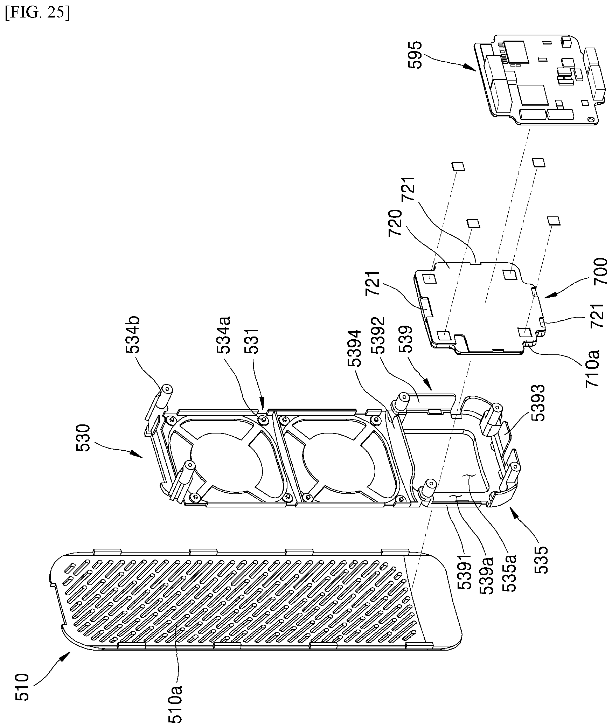

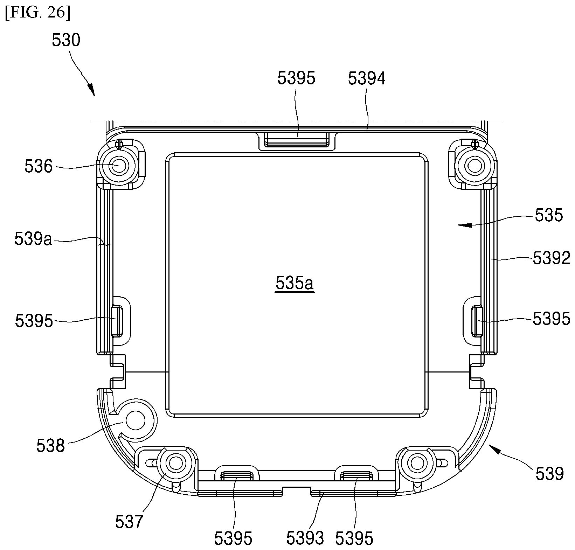

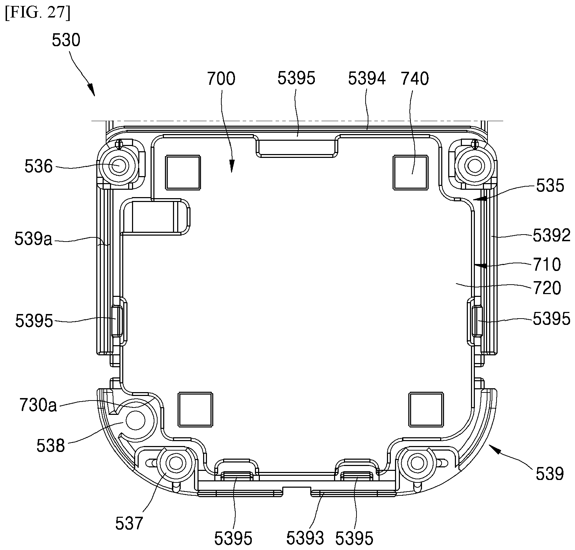

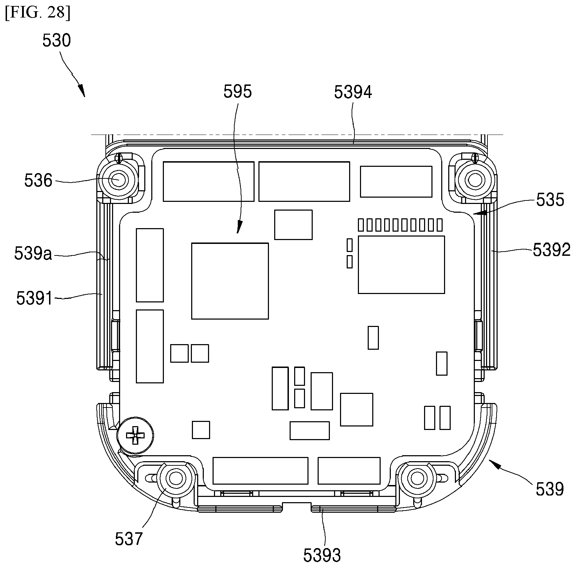

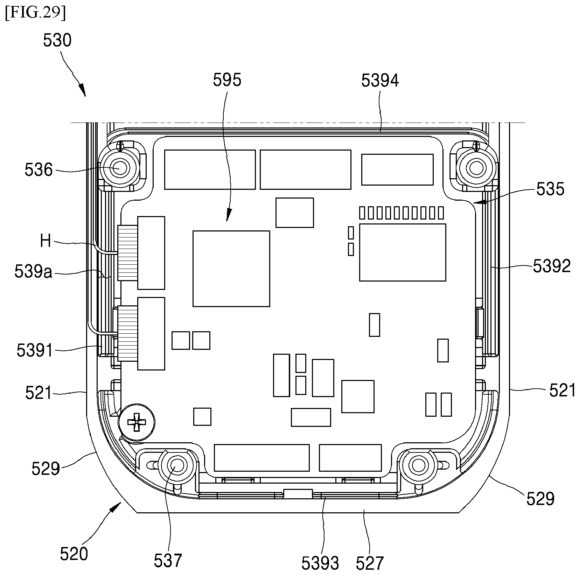

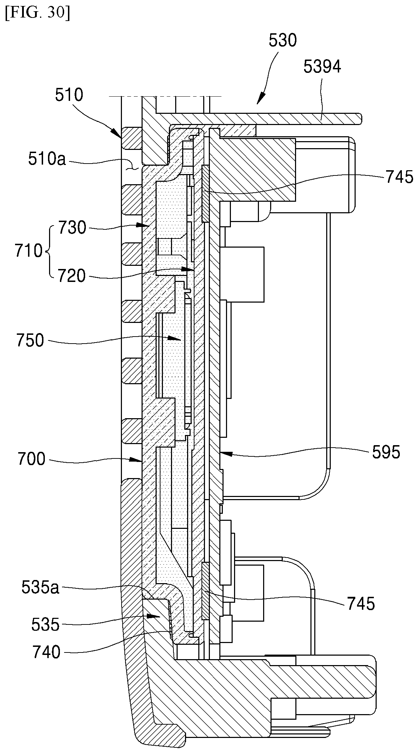

FIG. 24 is a front exploded perspective view showing examples of a front cover, a fan cover, an acoustic portion, and a main circuit board separated from a portable air purifier. FIG. 25 is a rear exploded perspective view showing examples of a front cover, a fan cover, an acoustic portion, and a main circuit board separated from a portable air purifier. In addition, FIG. 26 is a rear view showing a second cover of FIG. 25 and FIG. 27 is a rear view showing a state of coupling between the second cover of FIG. 26 and an acoustic portion. In addition, FIG. 28 is a rear view showing a state of coupling between the second cover of FIG. 27 and the main circuit board, FIG. 29 is a rear view showing a state of connection between the main circuit board of FIG. 28 and a harness, and FIG. 30 is a cross-sectional view of a structure of portion "XXX" of FIG. 5, where a battery is removed.

Referring to FIGS. 19 and 24 to 26, a second cover 535 may include a cover hole 535a. The cover hole 535a may penetrate the second cover 535 in a forward and rearward direction. The second cover 535 may provide a passage to communicate between an acoustic portion 700 and a discharge outlet 510a.

At least a portion of the acoustic portion 700 may be exposed to the discharge outlet 510a through the cover hole 535a. In this embodiment, it is exemplified that the second case 735 and a speaker 750 of the speaker case 710 are exposed through the fan cover 530 via the cover hole 535a.

Advantageously, the cover hole 535a may have a shape and size corresponding to those of the second case 735.

A first case 731 defining an edge of the front case 730 may face a rear surface of the second cover 535. In addition, at least a portion of the first case 731 may overlap with at least a portion of the second cover 535 in a forward and rearward direction. For example, the first case 731 may face the rear surface of the second cover 535 at the outer side of the cover hole 535a.

A coupling member 740 may be disposed between the first case 731 and the second cover 535. The coupling member 740 may couple the first case 731 and the second cover 535 between the first case 731 and the second cover 535.

For example, the coupling member 740 may be an adhesive sheet to which an adhesive is applied to both sides of a thin sheet. A rear surface of the coupling member 740 is adhered to the first case and a front surface of the coupling member 740 is adhered to the second cover 535 to couple the first case 731 and the second cover 535.

When the first case 731 is coupled to the second cover 535, the second case 735 may be inserted into a cover hole 535a and may be coupled to the second cover 535. That is, the second case 735 may be coupled to the second cover 535 by inserting the second case 735 into the cover hole 535a.

The coupling position between the fan cover 530 and the acoustic portion 700 may be guided by the coupling between the second case 735 and the second cover 535 by fitting. In addition, the speaker 750 may be exposed through the fan cover 530 by the coupling between the second case 735 and the second cover 535 by fitting.

According to the present embodiment, components such as the protruding rib 736, the restraining protrusion 737, and the front rib 738 may be accommodated in the second case 735. The speaker 750 may be disposed behind the second case 735, that is, may be provided at a position that overlaps with the second case 735 in the forward and rearward direction.

Therefore, the speaker 750 may be exposed through the fan cover 530 via the cover hole 535a into which the second case 735 is inserted, thereby effectively transmitting the sound by the acoustic portion 700.

According to the present embodiment, the main circuit board 595 may be disposed between the suction inlet 570a and the acoustic portion and may be coupled to the acoustic portion 700. More specifically, the main circuit board 595 may be disposed between a battery 560 and a speaker case 710 and may be coupled to the speaker case 710.

Referring to FIGS. 25 to 27, the fan cover 530 may define a board fastening boss 538 to couple to the main circuit board 595. The board fastening boss 538 may protrude from the second cover 535 toward the suction inlet 570a.

Advantageously, the board fastening boss 538 protrudes rearward from the second cover 535 and may protrude by a length corresponding to that of the acoustic portion 700 in a first direction. The board fastening boss 538 may pass through the acoustic portion 700 in the first direction and may be coupled to the main circuit board 595.

The board fastening boss 538 may be defined adjacent to at least one of the corners of the second cover 535 having a substantially quadrangular shape. In this embodiment, it is exemplified that the board fastening boss 538 is defined at any one of the corners of the second cover 535.

A fifth fastening protrusion 536 may be defined on the second cover 535. The fifth fastening protrusion 536 protrudes rearward from the rear surface of the second cover 535. The fifth fastening protrusion 536 may be coupled to a filter portion 550 by fitting. The fifth fastening protrusions 536 may be defined at upper corners of the second cover 535.

That is, a fourth fastening boss 534a (see FIG. 14) is a coupling point between the fan cover 530 and the filter portion 550 in a first area (A) and the fifth fastening boss 536 is a coupling point between the fan cover 530 and the filter portion 550 in a second area (B).

The fan cover 530 and the filter portion 550 may be coupled to each other at a plurality of points by the fourth fastening boss 534a defined at the upper portion thereof and the fifth fastening boss 536 defined at the lower portion thereof. Therefore, the fan cover 530 and the filter portion 550 may be coupled stronger and more stably. In addition, the fan portions 540 and 545 (see FIG. 5) disposed between the fan cover 530 and the filter portion 550 may also be stably coupled between the fan cover 530 and the filter portion 550.

In addition, the second cover 535 may further include a sixth fastening protrusion 537. The sixth fastening protrusion 537 protrudes rearward from the rear surface of the second cover 535. The sixth fastening protrusion 537 may be coupled to the battery 560 by fitting. The sixth fastening protrusion 537 may be defined at lower corners of the second cover 535.

The fan cover 530 and the battery 560 (see FIG. 5) may be coupled to each other by the coupling between the sixth fastening protrusion 537 and the battery 560 by fitting.

In this embodiment, it is exemplified that the board fastening boss 538 is defined adjacent to one of the sixth fastening protrusions 537. The board fastening boss 538 may pass through the acoustic portion 700 in the first direction and contact the main circuit board 595 from the rear side of the acoustic portion 700.

For example, the main circuit board 595 and the fan cover 530 may be coupled to each other by a fastening member such as a screw. The fastening member penetrates the main circuit board 595 from the rear of the main circuit board 595 and may be fastened to the board fastening boss 538. Therefore, the main circuit board 595 and the fan cover 530 may be coupled.

The acoustic portion 700 may include a boss avoiding portion 710a. The boss avoiding portion 710a may be formed by cutting a portion of the acoustic portion 700 that overlaps with the board fastening boss 538 and the main circuit board 595 in a forward and rearward direction. In the present embodiment, it is exemplified that the boss avoiding portion 710a is concavely recessed from a portion of the corner of the speaker case 710. The boss avoiding portion 710a may provide a passage to pass the connecting component to directly connect the main circuit board 595 and the fan cover 530 having the acoustic portion 700 therebetween (that is, the board fastening boss) through the acoustic portion 700.

As the main circuit board 595 and the fan cover 530 are coupled, as shown in FIGS. 25, 28, and 30, the acoustic portion 700 disposed therebetween may contact the main circuit board 595 and the fan cover 530 and may be coupled between the main circuit board 595 and the fan cover 530.

That is, the acoustic portion 700 is pressed toward the fan cover 530 by the main circuit board 595 coupled to the fan cover 530 at the rear side of the acoustic portion 700 and the front surface of the acoustic portion 700 is coupled to the second cover 535 by the coupling member 740. In this state, the acoustic portion 700 may be stably coupled between the main circuit board 595 and the fan cover 530.

In other words, the acoustic portion 700 may be stably supported on both sides by the fan cover 530 and the main circuit board 595 in contact with the acoustic portion 700 from the both sides and may be firmly coupled inside of the portable air purifier 50.

An impact absorbing member 745 may be further disposed between the acoustic portion 700 and the main circuit board 595 as shown in FIGS. 24 to 27. The impact absorbing member 745 may be made of elastically deformable material and may contact the acoustic portion 700 and the main circuit board 595.

For example, the impact absorbing member 745 may be made of a sponge and may be disposed between the rear case 720 and the main circuit board 595. When an opposite surface of the main circuit board 595 to the surface to place various chips is a rear surface of the main circuit board 595, the impact absorbing member 745 may contact the rear surface of the rear case 720 and the rear surface of the main circuit board 595.

A plurality of impact absorbing members 745 may be disposed between the rear case 720 and the main circuit board 595. In the present embodiment, it is exemplified that the plurality of impact absorbing members 745 are disposed at respective corners of the rear case 720.

The impact absorbing member 745 may prevent a direct collision between the acoustic portion 700 and the main circuit board 595 and may absorb vibration generated from the acoustic portion 700 or the main circuit board 595 or transmitted to the acoustic portion 700 or the main circuit board 595.

That is, the impact absorbing member 745 may inhibit the transmission of the vibration generated by the acoustic portion 700 to the main circuit board 595 or the transmission of the vibration caused by the operations of the fan portions 540 and 545 to the acoustic portion 700 through the main circuit board 595. Therefore, the impact absorbing member 745 may effectively inhibit damage to the main circuit board 595 due to the vibration generated by the acoustic portion 700 or degradation of the performance of the acoustic portion 700 due to the transmission of the vibration generated by the operations of the fan portions 540 and 545 to the acoustic portion 700.

Referring to FIG. 5, a portable air purifier 50 of this embodiment may further include a communicator 760. The communicator 760 may perform wireless communication between the portable air purifier 50 and a sensor portion 600 or an external device such as a mobile terminal and the portable air purifier 50.

The communicator 760 may include a near field communicator to communicate with the sensor portion 600 or the mobile terminal at near field. For example, the communicator 760 may include a Bluetooth communicator. In addition, the communicator 760 may include a communicator to support a low-power wireless communication scheme such as Bluetooth low energy (BLE) or a portion to support various near field communication schemes such as a near filed communication (NFC) module.

The portable air purifier 50 may transmit and receive various pieces of information, data, and commands to and from the sensor portion 600 and the mobile terminal based on the communication performed by the communicator 760.

In addition, the communicator 760 may include a wireless sound transmission component of the acoustic portion 700. The acoustic portion 700 may function as a wireless speaker such as a Bluetooth speaker using the component of the communicator 760.

In this embodiment, it is exemplified that the tcommunicator 760 is provided separately from the main circuit board 595 and is disposed behind the main circuit board 595. For example, the communicator 760 may be disposed on an upper plane of the battery 560 and may be disposed on the battery 560.

### [Operation and effect of acoustic portion]

A portable air purifier 50 of this embodiment may perform an air purification function and a sound transmission function with an apparatus, thereby improving satisfaction of a user desiring to perform various functions with an apparatus.

In addition, the portable air purifier 50 of this embodiment may include a rechargeable battery 560 to provide a power to purify air and transmit the sound. Therefore, the portable air purifier 50 may perform the air purification function or the acoustic function even when carrying or in places where power connection is difficult.

In addition, for the portable air purifier 50 according to this embodiment, an acoustic portion 700 may be provided at a position that deviates from a path through which air flows for the air purification.

In this case, a possibility of interfering with, by the acoustic portion 700 accommodated in the case 520, the air flow for the air purification is lowered, and a possibility of adversely affecting the operation of the acoustic portion 700 due to the air flow for the air purification is significantly lowered.

That is, a possibility of increasing flow path resistance inside of the portable air purifier 50 may be effectively reduced based on the arrangement of the acoustic portion 700, a possibility of improperly transmitting the sound due to the air flow, or distorting the sound may be effectively reduced.

In addition, electric components related to the air purification function, such as the fan portions 540, 545, the filter portion 550, and the battery 560 and acoustic components related to the acoustic function, such as the acoustic portion 700, are intensively accommodated in the case 520 without affecting each other's functions.

Therefore, the portable air purifier 50 according to the present disclosure may perform the air purification function and the acoustic function and achieve a high level of air purification performance and acoustic performance.

In addition, for the portable air purifier 50 of the present embodiment, the acoustic portion 700 may have a small size such that the acoustic portion 700 is provided in a narrow space between the fan cover 530 and the main circuit board 595.

In this case, it is possible to add a sound transmission function to the portable air purifier 50 without the need to increase the size of the device or reduce the size of components having high relevance between the size and the performance, such as the battery 560.

Therefore, the portable air purifier 50 of the present embodiment may have high structural stability while maintaining a compact shape.

A front panel 510 is disposed in front of the acoustic portion 700 and defines a discharge outlet 510a. The discharge outlet 510a may be evenly spread over the entire front panel 510.

The discharge outlets 510a defined in a first area (A) are used as a passage for air discharge. However, the discharge outlet 510a defined in a second area (B) may not function as a passage for air discharge.

However, if the discharge outlet 510a is removed from the second area (A), a front appearance of the portable air purifier 50 may be adversely affected.

In consideration of the point, in this embodiment, the acoustic portion 700 is disposed behind the discharge outlet 510a in the second area (B), and the discharge outlet 510a in the second area (B) may function as a speaker grill.

Accordingly, a portion of the front panel 510 in the second area (B) may be used as a speaker grill without the need to add a speaker grill to transmit the sound. Therefore, the speaker grill to transmit the sound may be inexpensively provided in the portable air purifier 50 without damaging the front appearance of the portable air purifier 50.

That is, the acoustic portion 700 is disposed in the space not used as an air flow path for the air purification and the front panel 510 also functions as the speaker grill. Therefore, the portable air purifier 50 according to this embodiment may easily and inexpensively manufacture a structure to transmit the sound while maintaining a beautiful front appearance of the portable air purifier 50.

### [Structure of fan cover rib]

Referring to FIGS. 5 and 24 to 30, a second cover 535 may form a surface perpendicular to a first direction. At least a portion of the second cover 535 may be disposed adjacent to a case 520, for example, a first surface 521 and a third surface 527. In addition, the at least a portion of the second cover 535 may be disposed adjacent to a second connection surface 529 connecting between the first surface 521 and the third surface 527.

The fan cover 530 may further include a fan cover rib 539. In this embodiment, it is exemplified that the fan cover rib 539 is disposed on the second cover 535. The fan cover rib 539 may protrude rearward from the second cover 535.

At least a portion of the fan cover rib 539 may pass through between a main circuit board 595 and the case 520. More specifically, at least a portion of the fan cover rib 539 may pass through between the first surface 521 and the main circuit board 595 and between the third surface 527 and the main circuit board 595.

According to the present embodiment, the fan cover rib 539 may include first ribs 5391 and 5392. The first ribs 5391 and 5392 may have the wall shape and protrude rearward from a side edge of the second cover 535 adjacent to the first surface 521.

The first ribs 5391 and 5392 may be disposed at both edges of the second cover 535 in a horizontal direction. That is, a pair of first ribs 5391 and 5392 may face each other in the horizontal direction in the second cover 535. Each of the first ribs 5391 and 5392 may form the wall blocking between the first surface 521 of the case 520 and the main circuit board 595.

The pair of first ribs 5391 and 5392 facing each other may be spaced apart by a distance corresponding to a length of the main circuit board 595 in the horizontal direction. If a length of the acoustic portion 700 in the horizontal direction is longer than that of the main circuit board 595 in the horizontal direction, the pair of first ribs 5391 and 5392 may be spaced apart by a distance corresponding to the length of the acoustic portion 700 in the horizontal direction.

The acoustic portion 700 and the main circuit board 595 are disposed between the pair of first ribs 5391 and 5392 and may be coupled to the fan cover 530. In this case, the pair of first ribs 5391 and 5392 may guide the horizontal installation positions of the acoustic portion 700 and the main circuit board 595 and may contribute to coupling among the fan cover 530, the acoustic portion 700, and the main circuit board 595 by press fitting.

The fan cover rib 539 may include a second rib 5393. The second rib 5393 may have a shape of the wall that protrudes rearward from a lower edge of the second cover 535 adjacent to the third surface 527. The second rib 5393 may form the wall blocking between the third surface 527 of the case 520 and the main circuit board 595.

The second rib 5393 and the pair of first ribs 5391 and 5392 facing each other may contact edges of the main circuit board 595 at a lower portion of the main circuit board 595 and at both sides of the main circuit board 595 in the horizontal direction and surround the main circuit board 595.

If the horizontal length of the acoustic portion 700 is longer than the horizontal length of the main circuit board 595, the pair of first ribs 5391 and 5392 may contact the horizontal edge of the acoustic portion 700. In addition, if a lower edge of the acoustic portion 700 is positioned below a lower edge of the main circuit board 595, the second rib 5393 may contact the lower edge of the acoustic portion 700.

In addition, at least a portion of the fan cover rib 539 may pass through between the fan portions 540 and 545 and the acoustic portion 700. For example, a portion of the fan cover rib 539 may form the wall that protrudes rearward from a boundary between the first cover 531 and the second cover 535.

In addition, the wall may advantageously extend in the horizontal direction to pass through between the fan portions 540 and 545 and the acoustic portion 700, and in this case, a vertical position of the wall is advantageously between the fan portions 540 and 545 and the acoustic portion 700.

For example, the fan cover rib 539 may include a third rib 5394. The third rib 5394 may cross between the fan portions 540 and 545 and the main circuit board 595. The third rib 5394 may have the wall shape that protrudes rearward from a boundary between the first cover 531 and the second cover 535.

The third rib 5394 may function as a blocking wall to block between the fan portions 540 and 545 and the acoustic portion 700. The third rib 5394 suppresses the sound transmitted by the acoustic portion 700 from being affected by the airflow passing through the fan portions 540 and 545. Therefore, the third rib 5394 may achieve a high level of acoustic performance when the air purification function and the acoustic function are simultaneously performed.

The second rib 5393 and the third rib 5394 may face each other in the vertical direction in the second cover 535. The second rib 5393 and the third rib 5394 facing each other may be spaced apart from each other by a distance corresponding to a length of the main circuit board 595 in the vertical direction. If the vertical length of the acoustic portion 700 is larger than the vertical length of the main circuit board 595, the second rib 5393 and the third rib 5394 may be spaced apart from each other by a distance corresponding to the vertical length of the acoustic portion 700.

The second rib 5393, the third rib 5394, and the pair of first ribs 5391 and 5392 may contact the edge of the main circuit board 595 at both ends of the main circuit board 595 in the vertical direction and both ends of the main circuit board 595 in the horizontal direction and may surround the main circuit board 595.

If the horizontal length of the acoustic portion 700 is longer than that of the main circuit board 595, the pair of first ribs 5391 and 5392 may contact the horizontal edge of the acoustic portion 700. In addition, if the vertical length of the acoustic portion 700 is longer than that of the main circuit board 595, the second rib 5393 and the third rib 5394 may contact the edge of the acoustic portion 700.

The acoustic portion 700 and the main circuit board 595 may each be disposed between the second rib 5393 and the third rib 5394 and may be coupled to the fan cover 530. In this case, the second rib 5393 and the third rib 5394 may guide the installation positions of the acoustic portion 700 and the main circuit board 595 in the vertical direction and may contribute to coupling among the fan cover 530, the acoustic portion 700, and the main circuit board 595 by press fitting.

The fan cover rib 539 including the first ribs 5391 and 5392, the second rib 5393, and the third rib 5394 may form the wall that surrounds the edge of the second cover 535.

For example, the fan cover rib 539 may have a shape of a quadrangle including the wall crossing between the fan portions 540 and 545 and the acoustic portion 700, the wall that protrudes rearward from the horizontal edge of the second cover 535, and the wall that protrudes rearward from the lower edge. That is, the fan cover rib 539 may include the wall that extends along the outer edge of the second cover 535.

The second cover 535 includes a space surrounded by the second cover 535 and the fan cover rib 539 at a rear side thereof and the rear side of the space is opened. In addition, the acoustic portion 700 and the main circuit board 595 disposed at the rear side of the second cover 535 may be accommodated in that space.

The acoustic portion 700 and the main circuit board 595 accommodated in that space may be protected by the fan cover rib 539 that surrounds the acoustic portion 700 and the main circuit board 595. For example, the acoustic portion 700 and the main circuit board 595 accommodated in the space may be protected from the influence of airflow passing through the fan portions 540 and 545 and also from external impact.

In addition, the fan cover rib 539 that surrounds the acoustic portion 700 and the main circuit board 595 may function as the blocking wall to block transmission of an electromagnetic wave emitted from the main circuit board 595 to the case 520.

A horizontal length or a vertical length of the space surrounded by the fan cover rib 539 may correspond to that of the acoustic portion 700 or the main circuit board 595.

The fan cover rib 539 may guide the forward, rearward, and vertical positions of the acoustic portion 700 and the main circuit board 595 on the fan cover 530 and may contribute to coupling among the fan cover 530, the acoustic portion 700, and the main circuit board 595 by press fitting to at least one of the acoustic portion 700 or the main circuit board 595.

In addition, the fan cover rib 539 may include a wire passage 539a. The wire passage 539a may be recessed by cutting a portion of the fan cover rib 539. On the fan cover rib 539, the wire passage 539a may provide a path necessary for a harness (H) connected to the acoustic portion 700 and the main circuit board 595 to pass through the fan cover rib 539.

In the present embodiment, it is exemplified that the wire passage 539a is recessed by cutting at least a portion of one of the pair of first ribs 5391 and 5392. For example, the wire passage 539a may be defined at one of the pair of first ribs 5391 and 5392.

For example, the wire passage 539a may be concaved by cutting a rear end of the first rib 5391. That is, the portion of the first rib 5391 defining the wire passage 539a may form the wall that protrudes less to the rear side than the first rib 5392.

When viewed from the side, the wire passage 539a may define a space opened to one side in a horizontal direction between the first rib 5391 and the battery 560.

The harness (H) connected to the acoustic portion 700 and the main circuit board 595 may pass the fan cover rib 539 through the wire passage 539a defined at the side of the fan cover rib 539.

The harness (H) penetrating the side of the fan cover rib 539 may be connected to at least one of the fan portions 540 and 545, the battery 560, or a sub circuit board 590.

According to the present embodiment, a portable air purifier 50 includes a suction inlet 570a and a discharge outlet 510a on a rear surface and a front surface thereof. In addition, the portable air purifier 50 provides a passage to transmit sound received from the acoustic portion 700 on the front surface thereof. That is, the portable air purifier 50 provides a flow path for air flow and the passage to transmit the sound on the rear surface and the front surface thereof.

Therefore, components of the portable air purifier 50 may be electrically connected through the side surface of the portable air purifier 50.

A wire for electrical connection between the components of the portable air purifier 50 may be disposed in a space between the components thereof and a first surface 521 of a case 520.

In this embodiment, in consideration of the above matter, the wire passage 539a defined at the side of the fan cover rib 539 provides a lateral passage to open among the acoustic portion 700, the main circuit board 595, and the first surface 521 of the case 520.

The harness (H) that has passed the fan cover rib 539 through the wire passage 539a defining the lateral passage may be inserted into a passage between the first surface 521 disposed at an inner side of the portable air purifier 50 and the fan cover rib 539.

The harness (H) inserted into the passage defined at the inner side of the portable air purifier 50 may be connected to the battery 560 or fan portions 540 and 545 through the passage defined between the fan portions 540 and 545 and the first surface 521. The passage provided between the first surface 521 and the fan cover rib 539 and the passage provided between the first surface 521 and the fan portions 540 and 545 may be connected to each other in a vertical direction.

The fan cover 530 may further include an engaging protrusion 5395. The engaging protrusion 5395 may be spaced apart from the second cover 535 by a predetermined distance in a forward and rearward direction and may protrude from the fan cover rib 539. The engaging protrusion 5395 may be spaced apart from the second cover 535 by the predetermined distance and may protrude from the fan cover rib 539 in a second direction or a third direction.

The engaging protrusion 5395 may protrude from at least one of the first ribs 5391 and 5392, the second rib 5393, or the third rib 5394. In the present embodiment, it is exemplified that the engaging protrusions 5395 are disposed on the first ribs 5391 and 5392, the second rib 5393, and the third rib 5394. That is, a plurality of engaging protrusions 5395 may be defined on the first ribs 5391 and 5392, the second rib 5393, and the third rib 5394.

For example, at least one engaging protrusion 5395 may be defined on the pair of first ribs 5391 and 5392. The engaging protrusions 5395 may protrude from the first ribs 5391 and 5392 in a horizontal direction. In this case, the engaging protrusions 5395 may protrude in a direction facing each other.

In addition, at least one engaging protrusion 5395 may be defined on the second rib 5393. In the present embodiment, it is exemplified that a pair of engaging protrusions 5395 are defined on the second rib 5393 and are spaced apart from each other by a predetermined distance in the horizontal direction. Each of the engaging protrusions 5395 defined on the second rib 5393 may protrude in an upward direction, that is, a direction facing the third rib 5394.

In addition, at least one engaging protrusion 5395 may be defined on the third rib 5394. The engaging protrusion 5395 defined on the third rib 5394 may protrude in a downward direction, that is, in a direction facing the second rib 5393.

Each of the engaging protrusions 5395 defined on each of the first ribs 5391 and 5392, the second rib 5393, and the third rib 5394 may be elastically deformable in the forward and rearward directions. That is, each of the engaging protrusions 5395 integrated with the second cover 535 and the fan cover rib 539 is elastically deformed around the connecting portion with the fan cover rib 539, and may be elastically deformed in a direction away from or closer to the second cover 535.

The acoustic portion 700 may be coupled between the engaging protrusion 5395 and the second cover 535 by fitting. That is, a speaker case 710 of the acoustic portion 700 may be coupled to the fan cover 530 in a state in which the speaker case 710 is disposed between the engaging protrusion 5395 and the second cover 535.

In this case, the engaging protrusion 5395 presses a rear surface of the speaker case 710 forward from the rear of the speaker case 710. In this case, a front surface of the speaker case 710 pressed forward may contact the rear surface of the second cover 535.

That is, the speaker case 710 and the second cover 535 may be coupled to each other by press fitting the speaker case 710 between the rear surface of the second cover 535 and the engaging protrusion 5395.

A fitting groove 721 may be defined on a surface of the acoustic portion 700 facing the main circuit board 595. The fitting groove 721 may be concaved forward from the rear surface of the rear case 520.

The acoustic portion 700 may define a plurality of fitting grooves 721. In this embodiment, it is exemplified that, when the acoustic portion 700 and the fan cover 530 are coupled, the fitting groove 721 overlaps with the engaging protrusion 5395 in the forward and rearward direction.

In addition, each of the fitting grooves 721 may have a shape corresponding to that of the engaging protrusion 5395 that overlaps in the forward and rearward direction. For example, the fitting groove 721 that overlaps with each of the engaging protrusions 5395 defined on the first ribs 5391 and 5392 in the forward and rearward direction may have a horizontal length and a vertical length corresponding to those of engaging protrusion 5395.

When the speaker case 710 is inserted between the second cover 535 and the engaging protrusion 5395 for coupling between the acoustic portion 700 and the fan cover 530 by fitting, each of the engaging protrusions 5395 may be inserted into each of the fitting grooves 721.

The coupling between the engaging protrusion 5395 and the fitting groove 721 may guide the coupling position between the acoustic portion 700 and the fan cover 530 and may also firmly couple between the acoustic portion 700 and the fan cover 530 by fitting.

### [Operation and effect of fan cover rib]

According to the present embodiment, a case 520 may be made of aluminum having a light weight and high strength. As the case 520 has the light weight, the high strength, and facilitates surface processing, the case 520 may inhibit an increase in weight of an apparatus while effectively protecting internal components of a portable air purifier 50 from impact and may improve appearance quality of the portable air purifier 50.

However, the portable air purifier 50 including the case 520 made of the material has a high risk of propagation of an electromagnetic wave generated from a main circuit board 595 accommodated in the case 520 along the case 520.

In consideration of the above matter, in this embodiment, the fan cover rib 539 protrudes rearward from a fan cover 530 to surround an acoustic portion 700 and the main circuit board 595.

The fan cover rib 539 may be provided as the blocking wall that surrounds the main circuit board 595 between the main circuit board 595 and the case 520 to block between the main circuit board 595 and the case 520.

The fan cover rib 539 may effectively block the electromagnetic waves emitted from the main circuit board 595 from being transmitted to the case 520.

Therefore, the portable air purifier 50 has a low risk of transmission of the electromagnetic waves through the case 520, a light weight, a beautiful appearance, and excellent portability.

In addition, a second cover 535 defines a space surrounded by the second cover 535 and the fan cover rib 539 at a rear side thereof and the rear side of the space is opened. In addition, the acoustic portion 700 and the main circuit board 595 disposed at the rear side of the second cover 535 may be accommodated in that space.

The acoustic portion 700 and the main circuit board 595 accommodated in the space may be protected by the fan cover rib 539 that surrounds the acoustic portion 700 and the main circuit board 595.

For example, the acoustic portion 700 accommodated in the space may be protected from an influence of airflow passing through fan portions 540 and 545. In addition, as an outer side in vertical and horizontal directions of the acoustic portion 700 accommodated in the space is blocked by the fan cover rib 539, the acoustic portion 700 may be protected from external impact and the sound generated from the acoustic portion 700 may be effectively transmitted toward the front.

Therefore, the portable air purifier 50 of the present embodiment may achieve a high level of acoustic performance even when the air purification function and the acoustic function are simultaneously performed and may effectively protect the acoustic portion 700 from external impact.

In addition, as components such as the main circuit board 595 accommodated together with the acoustic portion 700 in the space may be effectively protected from the external impact by the fan cover rib 539, thereby reducing a possibility of malfunction of the portable air purifier 50 due to the external impact.

The invention is defined in the claims.

### [Description of Reference Numerals]

50: Portable air purifier
510: Front panel
520- Case
530: Fan cover
531: First cover
532: Upper air discharging portion
533: Lower air discharging portion
534a: First fastening protrusion
534b: Fourth fastening protrusion
535: Second cover
535a: Cover hole
536: Fifth fastening protrusion
537: Sixth fastening protrusion
538: Board fastening boss
539: Fan cover rib
539a: Wire passage
5391 and 5392: First rib
5393: Second rib
5394: Third rib
5395: Engaging protrusion
540: First fan portion
545: Second fan portion
550: Filter portion
551: Filter case
551a: Through-hole
552: Case body
552a: Upper surface
553: Second fastening protrusion
555: Protruding supporter
557: First fan cover coupler
558: Second fan cover coupler
559: Filter
560: Battery
570: Rear panel
580: Rear cover
590: Sub circuit board
595: Main circuit board
600: Sensor portion
700: Acoustic portion
710: Speaker case
710a: Boss avoiding portion
720: Rear case
721: Fitting groove
730: Front case
731: First case
735: Second case
736: Protruding rib
737: Restraining protrusion
738: Front rib
740: Coupling member
745: Impact absorbing member
750: Speaker
760: Communicator

## Claims

1. A portable air purifier, comprising:
a case (520) providing an accommodating space;
a rear panel (570) having a suction inlet (570a) and disposed at a first side of the case (520);
a front panel (510) having a discharge outlet (510a) and disposed at a second side of the case (520), the front panel (510) and the rear panel (570) facing each other in a first direction;
a fan portion (540, 545) accommodated in the accommodating space between the suction inlet (570a, 580a) and the discharge outlet (510a);
an acoustic portion (700) accommodated in the accommodating space between the rear panel (570) and the front panel (510), the acoustic portion (700) and the fan portion (540, 545) being arranged adjacent to each other in a second direction perpendicular to the first direction; and
a fan cover (530) extending in the second direction and being disposed between the fan portion (540, 545) and the discharge outlet (510a) and between the acoustic portion (700) and the discharge outlet (510a);
wherein the fan cover (530) comprises a cover hole (535a) corresponding to the acoustic portion (700) to provide a passage for communicating between the acoustic portion (700) and the discharge outlet (510a), wherein the acoustic portion (700) is at least partially exposed through the cover hole (535a).

2. The portable air purifier of claim 1, wherein the acoustic portion (700) comprises:
a speaker case (710) providing a speaker accommodating space; and
a speaker (750) accommodated in the speaker accommodating space.

3. The portable air purifier of claim 2, wherein the speaker case (710) comprises a rear case (720) facing the rear panel (570) and a front case (730) facing the discharge outlet (510a) and/or the front panel (510), the front case (730) being coupled to the rear case (720) and/or to the fan cover (530) and being disposed between the rear case (720) and the fan cover (530).

4. The portable air purifier of claim 3, wherein the front case (730) comprises:
a first case (731) coupled to the fan cover (530); and
a second case (735) inserted into the cover hole (535a).

5. The portable air purifier of claim 4,wherein the second case (735) protrudes further than the first case (731) toward the discharge outlet (510a) and is connected to the first case (731).

6. The portable air purifier according to any one of preceding claims when depending on claim 2, wherein a speaker mounting portion is disposed in the speaker case (710) configured to restrict a position of the speaker (750) in the speaker accommodating space.

7. The portable air purifier of claim 6 when depending on claim 3,
wherein the speaker mounting portion comprises a protruding rib (736) that protrudes from one of the front case (730) and the rear case (720) toward the other one of the front case (730) and the rear case (720), and
wherein the speaker (750) is disposed between the protruding rib (736) and the other one of the front case (730) and the rear case (720) to restrict the position of the speaker (750) in the speaker accommodating space in the first direction.

8. The portable air purifier of claim 7,
wherein the speaker mounting portion further comprises a restraining protrusion (737) that protrudes from the protruding rib (736) toward the rear case and is in contact with a side surface of the speaker (750) in order to restrict the position of the speaker (750) in the speaker accommodating space in a direction perpendicular to the first direction.

9. The portable air purifier of claim 7 or 8,
wherein the protruding rib (736) surrounds a hollow penetrating the front case (730) such that the speaker (750) is at least partially exposed toward the discharge outlet (510a) through the hollow of the front case (730).

10. The portable air purifier of claim 9,
wherein the speaker mounting portion further comprises a front rib (738) crossing the hollow in a direction perpendicular to the first direction and the speaker (750) is disposed between the front rib (738) and the rear case (720).

11. The portable air purifier according to any one of the preceding claims, further comprising a board (595) disposed between the rear panel (570) and the acoustic portion (700) and/or coupled to the acoustic portion (700).

12. The portable air purifier of claim 11,
wherein the fan cover (530) further comprises a board fastening boss (538) that protrudes toward the rear panel (570),
wherein the boss fastening boss passes near the acoustic portion in the first direction and is coupled to the board.

13. The portable air purifier of claim 12,
wherein the acoustic portion is fixed between the fan cover (530) and the board (595) coupled to each other and
wherein an impact absorbing member (745) is disposed between the acoustic portion (700) and the board (595).

14. The portable air purifier according to any one of preceding claims,
wherein the fan cover (530) further comprises a fan cover rib (539) that protrudes toward the rear panel (570)and
wherein at least a portion of the fan cover rib (539) passes between the fan portion (540, 545) and the acoustic portion (700).

15. The portable air purifier of claim 14 when depending on claim 11, wherein the fan cover rib (539) protrudes from the fan cover (530) in the first direction and surrounds the acoustic portion (700) and the board (595).

## Patentansprüche

1. Tragbarer Luftreiniger, der Folgendes umfasst:
ein Gehäuse (520), das einen Aufnahmeraum bereitstellt;
eine hintere Platte (570), die einen Saugeinlass (570a) aufweist und an einer ersten Seite des Gehäuses (520) angeordnet ist;
eine vordere Platte (510), die einen Förderauslass (510a) aufweist und an einer zweiten Seite des Gehäuses (520) angeordnet ist, wobei die vordere Platte (510) und die hintere Platte (570) in einer ersten Richtung zueinander zeigen;
einen Gebläseabschnitt (540, 545), der im Aufnahmeraum zwischen dem Saugeinlass (570a, 580a) und dem Förderauslass (510a) aufgenommen ist;
einen Akustikabschnitt (700), der im Aufnahmeraum zwischen der hinteren Platte (570) und der vorderen Platte (510) aufgenommen ist, wobei der Akustikabschnitt (700) und der Gebläseabschnitt (540, 545) in einer zweiten Richtung senkrecht zu der ersten Richtung nebeneinander angeordnet sind; und
eine Gebläseabdeckung (530), die in der zweiten Richtung verläuft und zwischen dem Gebläseabschnitt (540, 545) und dem Förderauslass (510a) und zwischen dem Akustikabschnitt (700) und dem Förderauslass (510a) angeordnet ist;
wobei die Gebläseabdeckung (530) ein Abdeckungsloch (535a) entsprechend dem Akustikabschnitt (700) umfasst, um einen Durchlass für eine Kommunikation zwischen dem Akustikabschnitt (700) und dem Förderauslass (510a) bereitzustellen, wobei der Akustikabschnitt (700) durch das Abdeckungsloch (535a) wenigstens teilweise freiliegt.

2. Tragbarer Luftreiniger nach Anspruch 1, wobei der Akustikabschnitt (700) Folgendes umfasst:
ein Lautsprechergehäuse (710), das einen Lautsprecher-Aufnahmeraum bereitstellt; und
einen Lautsprecher (750), der im Lautsprecher-Aufnahmeraum aufgenommen ist.

3. Tragbarer Luftreiniger nach Anspruch 2, wobei das Lautsprechergehäuse (710) ein hinteres Gehäuse (720), das zur hinteren Platte (570) zeigt, und ein vorderes Gehäuse (730), das zum Förderauslass (510a) und/oder zur vorderen Platte (510) zeigt, umfasst, wobei das vordere Gehäuse (730) mit dem hinteren Gehäuse (720) und/oder der Gebläseabdeckung (530) gekoppelt ist und zwischen dem hinteren Gehäuse (720) und der Gebläseabdeckung (530) angeordnet ist.

4. Tragbarer Luftreiniger nach Anspruch 3, wobei das vordere Gehäuse (730) Folgendes umfasst:
ein erstes Gehäuse (731), das mit der Gebläseabdeckung (530) gekoppelt ist; und
ein zweites Gehäuse (735), das in das Abdeckungsloch (535a) eingesetzt ist.

5. Tragbarer Luftreiniger nach Anspruch 4, wobei das zweite Gehäuse (735) im Vergleich zum ersten Gehäuse (731) weiter zum Förderauslass (510a) hin vorsteht und mit dem ersten Gehäuse (731) verbunden ist.

6. Tragbarer Luftreiniger nach einem der vorhergehenden Ansprüche, wenn abhängig von Anspruch 2, wobei im Lautsprechergehäuse (710) ein Lautsprecher-Montageabschnitt angeordnet ist, der konfiguriert ist, eine Position des Lautsprechers (750) im Lautsprecher-Aufnahmeraum zu begrenzen.

7. Tragbarer Luftreiniger nach Anspruch 6, wenn dieser von Anspruch 3 abhängt,
wobei der Lautsprecher-Montageabschnitt eine vorstehende Rippe (736) umfasst, die vom vorderen Gehäuse (730) oder vom hinteren Gehäuse (720) zum jeweils anderen des vorderen Gehäuses (730) und des hinteren Gehäuses (720) vorsteht, und
wobei der Lautsprecher (750) zwischen der vorstehenden Rippe (736) und dem jeweils anderen des vorderen Gehäuses (730) und des hinteren Gehäuses (720) angeordnet ist, um die Position des Lautsprechers (750) im Lautsprecher-Aufnahmeraum in der ersten Richtung zu begrenzen.

8. Tragbarer Luftreiniger nach Anspruch 7,
wobei der Lautsprecher-Montageabschnitt ferner einen Haltevorsprung (737) umfasst, der von der vorstehenden Rippe (736) zum hinteren Gehäuse vorsteht und mit einer Seitenfläche des Lautsprechers (750) in Kontakt ist, um die Position des Lautsprechers (750) im Lautsprecher-Aufnahmeraum in einer Richtung senkrecht zur ersten Richtung zu begrenzen.

9. Tragbarer Luftreiniger nach Anspruch 7 oder 8,
wobei die vorstehende Rippe (736) einen Hohlraum umgibt, der durch das vordere Gehäuse (730) verläuft, so dass der Lautsprecher (750) durch den Hohlraum des vorderen Gehäuses (730) wenigstens teilweise zum Förderauslass (S 10a) hin freiliegt.

10. Tragbarer Luftreiniger nach Anspruch 9,
wobei der Lautsprecher-Montageabschnitt ferner eine vordere Rippe (738) umfasst, die den Hohlraum in einer Richtung senkrecht zur ersten Richtung kreuzt, und wobei der Lautsprecher (750) zwischen der vorderen Rippe (738) und dem hinteren Gehäuse (720) angeordnet ist.

11. Tragbarer Luftreiniger nach einem der vorhergehenden Ansprüche, der ferner eine Platine (595) umfasst, die zwischen der hinteren Platte (570) und dem Akustikabschnitt (700) angeordnet ist und/oder mit dem Akustikabschnitt (700) gekoppelt ist.

12. Tragbarer Luftreiniger nach Anspruch 11,
wobei die Gebläseabdeckung (530) ferner einen Platinenbefestigungsvorsprung (538) umfasst, der zur hinteren Platte (570) vorsteht,
wobei der Vorsprungsbefestigungsvorsprung in der ersten Richtung nahe des Akustikabschnitts vorbeiläuft und mit der Platine gekoppelt ist.

13. Tragbarer Luftreiniger nach Anspruch 12,
wobei der Akustikabschnitt zwischen der Gebläseabdeckung (530) und der Platine (595), die miteinander gekoppelt sind, fixiert ist, und
wobei ein Stoßabsorptionselement (745) zwischen dem Akustikabschnitt (700) und der Platine (595) angeordnet ist.

14. Tragbarer Luftreiniger nach einem der vorhergehenden Ansprüche,
wobei die Gebläseabdeckung (530) ferner eine Gebläseabdeckungsrippe (539) umfasst, die zur hinteren Platte (570) vorsteht, und
wobei wenigstens ein Abschnitt der Gebläseabdeckungsrippe (539) zwischen dem Gebläseabschnitt (540, 545) und dem Akustikabschnitt (700) verläuft.

15. Tragbarer Luftreiniger nach Anspruch 14, wenn abhängig von Anspruch 11, wobei die Gebläseabdeckungsrippe (539) von der Gebläseabdeckung (530) in der ersten Richtung vorsteht und den Akustikabschnitt (700) und die Platine (595) umgibt.

## Revendications

1. Purificateur d'air portable, comportant :
un boîtier (520) fournissant un espace de réception ;
un panneau arrière (570) ayant une entrée d'aspiration (570a) et disposé sur un premier côté du boîtier (520) ;
un panneau avant (510) ayant une sortie d'évacuation (510a) et disposé sur un second côté du boîtier (520), le panneau avant (510) et le panneau arrière (570) étant dirigés l'un vers l'autre dans une première direction ;
une partie de ventilateur (540, 545) reçue dans l'espace de réception entre l'entrée d'aspiration (570a, 580a) et la sortie d'évacuation (510a) ;
une partie acoustique (700) reçue dans l'espace de réception entre le panneau arrière (570) et le panneau avant (510), la partie acoustique (700) et la partie de ventilateur (540, 545) étant agencées adjacentes l'une à l'autre dans une seconde direction perpendiculaire à la première direction ; et
un couvercle de ventilateur (530) s'étendant dans la seconde direction et étant disposé entre la partie de ventilateur (540, 545) et la sortie d'évacuation (510a) et entre la partie acoustique (700) et la sortie d'évacuation (510a) ;
dans lequel le couvercle de ventilateur (530) comporte un trou de couvercle (535a) correspondant à la partie acoustique (700) pour fournir un passage de communication entre la partie acoustique (700) et la sortie d'évacuation (510a), dans lequel la partie acoustique (700) est au moins partiellement exposée à travers le trou de couvercle (535a).

2. Purificateur d'air portable selon la revendication 1, dans lequel la partie acoustique (700) comporte :
un boîtier de haut-parleur (710) fournissant un espace de réception de haut-parleur ; et
un haut-parleur (750) reçu dans l'espace de réception de haut-parleur.

3. Purificateur d'air portable selon la revendication 2, dans lequel le boîtier de haut-parleur (710) comporte un boîtier arrière (720) dirigé vers le panneau arrière (570) et un boîtier avant (730) dirigé vers la sortie d'évacuation (510a) et/ou le panneau avant (510), le boîtier avant (730) étant couplé au boîtier arrière (720) et/ou au couvercle de ventilateur (530) et étant disposé entre le boîtier arrière (720) et le couvercle de ventilateur (530).

4. Purificateur d'air portable selon la revendication 3, dans lequel le boîtier avant (730) comporte :
un premier boîtier (731) couplé au couvercle de ventilateur (530) ; et
un second boîtier (735) inséré dans le trou de couvercle (535a).

5. Purificateur d'air portable selon la revendication 4, dans lequel le second boîtier (735) fait plus saillie que le premier boîtier (731) vers la sortie d'évacuation (510a) et est relié au premier boîtier (731).

6. Purificateur d'air portable selon l'une quelconque des revendications précédentes lorsque dépendante de la revendication 2, dans lequel une partie de montage de haut-parleur est disposée dans le boîtier de haut-parleur (710) configuré pour restreindre une position du haut-parleur (750) dans l'espace de réception de haut-parleur.

7. Purificateur d'air portable selon la revendication 6 lorsque dépendante de la revendication 3,
dans lequel la partie de montage de haut-parleur comporte une nervure saillante (736) qui fait saillie à partir d'un boîtier parmi le boîtier avant (730) et le boîtier arrière (720) vers l'autre boîtier parmi le boîtier avant (730) et le boîtier arrière (720), et
dans lequel le haut-parleur (750) est disposé entre la nervure saillante (736) et l'autre boîtier parmi le boîtier avant (730) et le boîtier arrière (720) pour restreindre la position du haut-parleur (750) dans l'espace de réception de haut-parleur dans la première direction.

8. Purificateur d'air portable selon la revendication 7,
dans lequel la partie de montage de haut-parleur comporte en outre une saillie de retenue (737) qui fait saillie à partir de la nervure saillante (736) vers le boîtier arrière et est en contact avec une surface latérale du haut-parleur (750) afin de restreindre la position du haut-parleur (750) dans l'espace de réception de haut-parleur dans une direction perpendiculaire à la première direction.

9. Purificateur d'air portable selon la revendication 7 ou 8,
dans lequel la nervure saillante (736) entoure un creux pénétrant dans le boîtier avant (730) de telle sorte que le haut-parleur (750) est au moins partiellement exposé vers la sortie d'évacuation (510a) à travers le creux du boîtier avant (730).

10. Purificateur d'air portable selon la revendication 9,
dans lequel la partie de montage de haut-parleur comporte en outre une nervure avant (738) croisant le creux dans une direction perpendiculaire à la première direction et le haut-parleur (750) est disposé entre la nervure avant (738) et le boîtier arrière (720).

11. Purificateur d'air portable selon l'une quelconque des revendications précédentes, comportant en outre une carte (595) disposée entre le panneau arrière (570) et la partie acoustique (700) et/ou couplée à la partie acoustique (700).

12. Purificateur d'air portable selon la revendication 11,
dans lequel le couvercle de ventilateur (530) comporte en outre un bossage de fixation de carte (538) qui fait saillie vers le panneau arrière (570),
dans lequel le bossage de fixation de bossage passe près de la partie acoustique dans la première direction et est couplé à la carte.

13. Purificateur d'air portable selon la revendication 12,
dans lequel la partie acoustique est fixée entre le couvercle de ventilateur (530) et la carte (595) couplés l'un à l'autre et
dans lequel un élément d'absorption de choc (745) est disposé entre la partie acoustique (700) et la carte (595).

14. Purificateur d'air portable selon l'une quelconque des revendications précédentes,
dans lequel le couvercle de ventilateur (530) comporte en outre une nervure de couvercle de ventilateur (539) qui fait saillie vers le panneau arrière (570), et
dans lequel au moins une partie de la nervure de couvercle de ventilateur (539) passe entre la partie de ventilateur (540, 545) et la partie acoustique (700).

15. Purificateur d'air portable selon la revendication 14 lorsque dépendante de la revendication 11, dans lequel la nervure de couvercle de ventilateur (539) fait saillie à partir du couvercle de ventilateur (530) dans la première direction et entoure la partie acoustique (700) et la carte (595).
